# EUROPÄISCHE PATENTSCHRIFT

(11) **EP 3 008 105 B1**
(45) Veröffentlichungstag und Bekanntmachung des Hinweises auf die Patenterteilung: **29.03.2017**
(21) Anmeldenummer: 14728568.8
(22) Anmeldetag: 05.06.2014
(51) Int. Cl.: C08G 65/336, C08L 71/02, C08L 101/10, C08G 77/08

(54) **HÄRTBARE ZUSAMMENSETZUNG AUF BASIS VON SILANGRUPPEN-HALTIGEN POLYMEREN UND EINEM ZINKKATALYSATOR**
CURABLE COMPOSITION ON THE BASIS OF POLYMERS CONTAINING SILANE GROUPS AND A ZINC CATALYST
COMPOSITION DURCISSABLE À BASE DE POLYMÈRES CONTENANT DES GROUPES SILANES ET D'UN CATALYSEUR DE ZINC

(30) Priorität: 11.06.2013 EP 13171554
(43) Veröffentlichungstag der Anmeldung: 20.04.2016
(73) Patentinhaber: Sika Technology AG, 6340 Baar (CH)
(72) Erfinder: CANNAS, Rita, CH-8600 Dübendorf (CH); BURCKHARDT, Urs, CH-8049 Zürich (CH)
(74) Vertreter: Sika Patent Attorneys
(86) Internationale Anmeldenummer: PCT/EP2014/061721
(87) Internationale Veröffentlichungsnummer: WO 2014/198633

(56) Entgegenhaltungen:
- EP-A1- 2 388 297
- EP-A2- 0 508 119
- EP-A2- 0 649 878
- JP-A- H09 208 547
- JP-A- H09 220 853
- US-A1- 2011 028 647

## Beschreibung

### Technisches Gebiet

Die Erfindung betrifft härtbare Zusammensetzungen auf Basis von Silangruppen-haltigen Polymeren und einem Zinkkatalysator und die Verwendung des Zinkkatalysators für solche Zusammensetzungen sowie die Verwendung der Zusammensetzung, und daraus erhältliche Produkte.

### Stand der Technik

Silangruppen-haltige Polymere, welche auch als "silanfunktionelle Polymere" oder "silanmodifizierte Polymere" (SMP) oder "silanterminierte Polymere" (STP) bezeichnet werden, reagieren unter dem Einfluss von Feuchtigkeit durch Vernetzung der Silangruppen zu Kunststoffen aus und spielen eine bedeutende Rolle als Bindemittel in härtbaren Zusammensetzungen, welche in vielen technischen Anwendungen eingesetzt werden, beispielsweise als Dichtstoffe, Klebstoffe und Beschichtungen. Die Vernetzungsreaktion verläuft zweistufig, wobei die Silangruppen zuerst zu Silanolgruppen hydrolysieren, welche dann zu Siloxangruppen kondensieren. Zur Beschleunigung der Aushärtung werden meist Katalysatoren eingesetzt. Sehr oft handelt es sich dabei um toxikologisch bedenkliche Stoffe, welche eine potentielle Gefährdung von Verarbeiter und Umwelt darstellen. Dies gilt insbesondere für die breit eingesetzten Organozinn-Verbindungen, insbesondere Dialkylzinn(IV)carboxylate, wie z.B. Dibutylzinndilaurat, welche sich durch eine hervorragende Aktivität in Bezug auf die Vernetzungsreaktion sowie eine gute Hydrolysebeständigkeit auszeichnen, aber gesundheitsschädlich und stark wassergefährdend sind.

Aufgrund der Toxizität der Organozinn-Verbindungen wurden in letzter Zeit vermehrt Anstrengungen unternommen, diese durch andere, weniger toxische Katalysatoren auszutauschen. So wurden etwa Organotitanate, Organozirkonate und Organoaluminate als Ersatzkatalysatoren eingesetzt. Diese haben aber eine geringere Aktivität in Bezug auf die Vernetzungsreaktion, so dass sie eine deutlich langsamere Vernetzung des Silangruppen-haltigen Polymers und eine lange anhaltende Restklebrigkeit bewirken. Ausserdem sind sie wenig hydrolysebeständig, so dass die Vernetzungsgeschwindigkeit über die Zeit nachlässt und dadurch die Lagerfähigkeit von Zusammensetzungen einschränkt.

EP-A-0354138 und EP-A-1964872 beschreiben die Herstellung von Alkoxysilangruppen-terminierten Polydimethylsiloxanen aus Hydroxysilylgruppenterminierten Polydimethylsiloxanen und Alkoxysilanen unter Einsatz von Zink(II)-Verbindungen, wie Zn-Komplexen mit 1,3-Diketonat- und 1,3-Ketoesterat-Liganden, z.B. Zink(II)-bis(acetoacetonat) als Katalysatoren.

EP-A-2290007 und US-A-2011/0046304 betrifft die Anwendung von Zink(II)-Verbindungen zur Vernetzung von Alkoxysilangruppen-haltigen Polysiloxanen.

EP-A-2289972 beschreibt die Verwendung von Zinksalzen, insbesondere Zinkoctoat, als Katalysatoren zur Vernetzung von speziellen silylierten Polymeren, die Urethangruppen enthalten.

Auch die in den genannten Schriften eingesetzten Zink-Katalysatoren sind in Bezug auf die Vernetzungsreaktion wenig aktiv und hydrolyseempfindlich.

EP 2 388 297 A1 betrifft härtbare Zusammensetzungen umfassend ein oder mehrere organische Polymere mit einer siliziumhaltigen Gruppe.

US 2011/028647 A1 beschreibt vernetzbare Materialien auf Basis von Organosiliziumverbindungen, deren Vernetzung durch eine Metallverbindung der Haupt- oder Nebengruppen I oder II katalysiert wird.

EP 0 508 119 A2 betrifft ein lösungsmittelfreies Verfahren zur Herstellung einer aromatischen Amin-terminierten Verbindung, umfassend die Umsetzung eines mehrfunktionellen Acetessigsäureesters mit Ammoniak oder mit einer organischen Verbindung, die eine oder mehrere primäre Amino-Gruppen enthält, in Gegenwart eines sauren Katalysators.

EP 0 649 878 A2 beschreibt eine schnell härtende Zusammensetzung, in der als Basispolymer ein Diorganopolysiloxan oder ein mit hydrolysierbaren Silylgruppen blockiertes Polyoxyalkylenpolymer verwendet wird.

JP H09 208547 A betrifft ein wärmeempfindliches Aufzeichnungsmaterial, umfassend ein Metallsalz und ein Anilid-Derivat. JP H09 220853 A betrifft einen Entwickler, umfassend ein polyvalentes Metallsalz, bevorzugt ein Essigsäureanilid-Derivat.

### Darstellung der Erfindung

Aufgabe der Erfindung ist es, einen Katalysator für die Vernetzung von Silangruppen-haltigen Polymeren bereitzustellen, der die vorstehend genannten Nachteile aus dem Stand der Technik überwindet. Insbesondere soll der Katalysator gegenüber den aus dem Stand der Technik bekannten Vernetzungskatalysatoren eine verbesserte Arbeitssicherheit und einen höheren Umweltschutz bieten und mittels Feuchtigkeit eine schnelle, über die Zeit wenig nachlassende Vernetzung der Silangruppen bewirken.
Eine weitere Aufgabe der Erfindung ist es, eine Zusammensetzung auf Basis von Silangruppen-haltigen Polymeren bereitzustellen, die eine niedrige Gefahreneinstufung erlaubt, eine gute Lagerfähigkeit aufweist und mittels Feuchtigkeit schnell aushärtet.

Diese Aufgaben konnten überraschenderweise durch die Verwendung einer speziellen Zink(II)-Komplexverbindung als Katalysator gelöst werden.

Gegenstand der Erfindung ist daher die Verwendung einer Zink(II)-Komplexverbindung der Formel Znₖ(L)ₓ(Y)₂ₖ₋ₙₓ, wobei k für eine ganze Zahl von 1 bis 10 steht, x für 1, 2, 3 oder 4 steht, n dem Wert n in der nachstehenden Formel (I) des Liganden L entspricht, Y für einen einfach negativ geladenen Liganden steht und L für einen Liganden der Formel (I) steht, 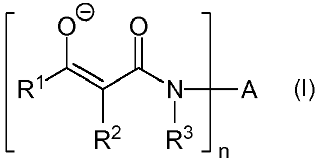 wobei
n für 1, 2 oder 3 steht,
A für R⁴ oder einen Polyoxyalkylen-Rest oder einen Rest einer polyoxyalkylierten Verbindung gegebenenfalls mit einer oder zwei endständigen 1,3-Ketoamid-Gruppen der Formel 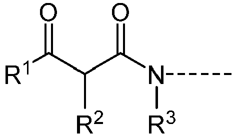 wobei R¹, R² und R³ wie nachstehend definiert sind, steht,
R¹ und R² unabhängig voneinander ein Wasserstoff-Rest oder ein einwertiger gesättigter oder ungesättigter Kohlenwasserstoff-Rest mit 1 bis 10 Kohlenstoff-Atomen sind oder zusammen ein zweiwertiger Alkylen-Rest mit 3 bis 6 Kohlenstoffatomen sind, und
R³ und R⁴ unabhängig voneinander ein Wasserstoff-Rest oder ein einwertiger gesättigter Kohlenwasserstoff-Rest mit 1 bis 12 Kohlenstoffatomen, der gegebenenfalls ein oder mehrere Heteroatome enthält, sind oder zusammen ein zweiwertiger Alkylen-Rest mit 3 bis 6 Kohlenstoffatomen, der gegebenenfalls ein oder mehrere Heteroatome enthält, sind,
als Katalysator für die Vernetzung von Silangruppen-haltigen Polymeren mittels Feuchtigkeit.

Ein weiterer Gegenstand der Erfindung ist eine Zusammensetzung umfassend mindestens ein Silangruppen-haltiges Polymer und mindestens eine Zink(II)-Komplexverbindung der Formel Znₖ(L)ₓ(Y)₂ₖ₋ₙₓ wie vorstehend definiert.

Die erfindungsgemäße Verwendung als Katalysator zeichnet sich insbesondere dadurch aus, dass die Zink(II)-Komplexverbindung der Formel Znₖ(L)ₓ(Y)₂ₖ₋ₙₓ in Bezug auf Arbeitssicherheit und Umweltschutz vorteilhaft ist, da die Zink(II)-Komplexverbindung deutlich weniger toxisch sind, als die im Stand der Technik eingesetzten Katalysatoren, und mittels Feuchtigkeit eine schnelle, über die Zeit kaum nachlassende Vernetzung der Silangruppen bewirkt. Die erfindungsgemäße Zusammensetzung zeichnet sich insbesondere dadurch aus, dass sie eine niedrige Gefahreneinstufung erlaubt, eine gute Lagerfähigkeit aufweist und mittels Feuchtigkeit schnell aushärtet.

### Weg zur Ausführung der Erfindung

Gemäß der Erfindung wird eine Zink(II)-Komplexverbindung der Formel Znₖ(L)ₓ(Y)₂ₖ₋ₙₓ als Katalysator für die Vernetzung von Silangruppen-haltigen Polymeren mittels Feuchtigkeit verwendet. Feuchtigkeit bezieht sich auf die Anwesenheit von Wasser, wobei im Allgemeinen die Luftfeuchtigkeit ausreicht.

Durch die Feuchtigkeit wird die vorstehend erläuterte zweistufige Reaktion aus der Hydrolyse der Silangruppen unter Bildung von Silanolgruppen und der anschließenden Kondensation der Silanolgruppen zu Siloxangruppen eingeleitet. Die Kondensationsreaktion führt zur Vernetzung des Silangruppen-haltigen Polymers und damit zur Aushärtung. Das ausgehärtete Produkt ist vorzugsweise ein elastischer Kunststoff.

Die Erfindung betrifft auch eine Zusammensetzung umfassend mindestens ein Silangruppen-haltiges Polymer und mindestens eine Zink(II)-Komplexverbindung der Formel Znₖ(L)ₓ(Y)₂ₖ₋ₙₓ als Katalysator. Die Zusammensetzung ist mittels Feuchtigkeit härtbar, d.h. die Zusammensetzung kann bei Anwesenheit von Feuchtigkeit über den vorstehend beschriebenen Mechanismus ausgehärtet werden.

Im Folgenden wird die erfindungsgemäße Zusammensetzung im Einzelnen erläutert. Alle Angaben beziehen sich auch entsprechend für die erfindungsgemäße Verwendung, insbesondere bezüglich der Zink(II)-Komplexverbindung der Formel Znₖ(L)ₓ(Y)₂ₖ₋ₙₓ und ihrer allgemeinen und bevorzugten Ausführungsformen.

Im vorliegenden Dokument bezeichnet der Begriff "Silangruppe" eine an einen organischen Rest gebundene Silylgruppe mit einem bis drei, insbesondere zwei oder drei, hydrolysierbaren Resten am Silicium-Atom. Die hydrolysierbaren Reste stellen dabei beispielsweise Alkoxy-, Acetoxy-, Ketoximato-, Amido- oder Enoxy-Reste dar. Silangruppen mit Alkoxy-Resten werden auch als "Alkoxysilangruppen" bezeichnet. Entsprechend bezeichnet der Begriff "Silan" eine organische Verbindung, welche mindestens eine Silangruppe aufweist.

Als "Epoxysilan", "Hydroxysilan", "(Meth)acrylatsilan", "Isocyanatosilan", "Aminosilan" bzw. "Mercaptosilan" werden Silane bezeichnet, die am organischen Rest zusätzlich zur Silangruppe eine oder mehrere Epoxy-, Hydroxyl-, (Meth)acrylat-, Isocyanato-, Amino- bzw. Mercaptogruppen aufweisen. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Als "Hydrosilan" wird eine Silicium-haltige organische Verbindung mit mindestens einer Si-H-Bindung bezeichnet.

Bei dem Silangruppen-haltigen Polymer handelt es sich insbesondere um ein Silangruppen-haltiges organisches Polymer. Der Begriff "Silangruppen-haltiges Polymer" bezeichnet eine mindestens eine Silangruppe tragende organische Verbindung, welche eine lineare oder verzweigte Polymerkette umfassend mindestens drei zusammenhängende, gleiche oder unterschiedliche Struktur-Einheiten, die auf polymerisierbare Monomere, wie beispielsweise Alkylenoxide, (Meth)acrylate oder Olefine, zurückgehen, aufweist. Die Polymerkette kann neben den genannten Struktur-Einheiten auch funktionelle Gruppen enthalten, z.B. Urethangruppen und/oder Harnstoffgruppen.

Mit "Poly" beginnende Substanznamen, wie Polyol oder Polyisocyanat, bezeichnen Substanzen, die formal zwei oder mehr der in ihrem Namen vorkommenden funktionellen Gruppen pro Molekül enthalten.

Ein Prepolymer ist ein Polymer mit funktionellen Gruppen, das als Vorstufe für die Bildung eines höhermolekularen Polymers dient.

Unter einem Heteroatom wird jedes in der organischen Chemie übliche Heteroatom verstanden, z.B. O, N oder S.

(Meth)acrylat bedeutet Methacrylat oder Acrylat.

Eine einkomponentige Zusammensetzung umfasst alle Bestandteile in einer Komponente. Eine mehrkomponentige bzw. zweikomponentige Zusammensetzung umfasst zwei oder mehr Komponenten, wobei ein Teil der Bestandteile in einer ersten Komponente und der andere Teil der Bestandteile in einer zweiten Komponente oder, soweit mehr als zwei Komponenten vorhanden sind, in mehreren weiteren Komponenten enthalten ist, wobei die Komponenten separat voneinander gelagert werden. Bei einer mehrkomponentigen oder zweikomponentigen Zusammensetzung werden die einzelnen Komponenten in der Regel kurz vor dem Gebrauch miteinander vermischt.

Als "lagerstabil" oder "lagerfähig" wird eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.

Das Zahlenmittel des Molekulargewichts Mn wird durch Gelpermeationschromatographie (GPC) gegen Polystyrol-Standard ermittelt.

Das Silan-Equivalentgewicht wird in g/Equivalent bzw. g/Eq angegeben und kann über den mittels Messung im induktiv gekoppelten Plasma (ICP) bestimmten Silicium-Gehalt eines Silangruppen-haltigen Polymers berechnet werden.

Die als Katalysator verwendete oder in der Zusammensetzung enthaltene Zink(II)-Komplexverbindung ist eine Zink(II)-Komplexverbindung der Formel Znₖ(L)ₓ(Y)₂ₖ₋ₙₓ, wobei k für eine ganze Zahl von 1 bis 10 steht, x für 1, 2, 3 oder 4 steht, n dem Wert n in der nachstehenden Formel (I) des Liganden L entspricht, Y für einen einfach negativ geladenen Liganden steht und L für einen Liganden der Formel (I) steht, 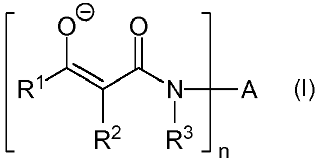 wobei
n für 1, 2 oder 3 steht,
A für R⁴ oder einen Polyoxyalkylen-Rest oder einen Rest einer polyoxyalkylierten Verbindung gegebenenfalls mit einer oder zwei endständigen 1,3-Ketoamid-Gruppen der Formel 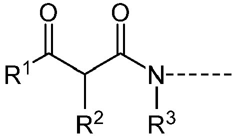 wobei R¹, R² und R³ wie nachstehend definiert sind, steht,
R¹ und R² unabhängig voneinander ein Wasserstoff-Rest oder ein einwertiger gesättigter oder ungesättigter Kohlenwasserstoff-Rest mit 1 bis 10 Kohlenstoff-Atomen sind oder zusammen ein zweiwertiger Alkylen-Rest mit 3 bis 6 Kohlenstoffatomen sind, und
R³ und R⁴ unabhängig voneinander ein Wasserstoff-Rest oder ein einwertiger gesättigter Kohlenwasserstoff-Rest mit 1 bis 12 Kohlenstoffatomen, der gegebenenfalls ein oder mehrere Heteroatome enthält, sind oder zusammen ein zweiwertiger Alkylen-Rest mit 3 bis 6 Kohlenstoffatomen, der gegebenenfalls ein oder mehrere Heteroatome enthält, sind.
A kann dabei nur für R⁴ stehen, wenn n für 1 steht.

Die Zn(II)-Komplexverbindung der Formel Znₖ(L)ₓ(Y)₂ₖ₋ₙₓ mit Zn als Zentralatom und koordinativ gebundenen Liganden L der Formel (I) und gegebenenfalls Y ist neutral. Der Index k ist eine ganze Zahl von 1 bis 10, bevorzugt 1 bis 5 und besonders bevorzugt 1. Der Index x ist 1, 2, 3 oder 4, bevorzugt 2. Der Index n entspricht dem Wert n in der Formel (I) des Liganden L. Der Wert 2k-nx ist vorzugsweise 0, d.h. es liegen vorzugsweise keine Liganden Y vor.

Der Ligand Y stellt einen beliebigen einfach negativ geladenen Liganden dar, wobei ein einfach negativ geladenes organisches Anion bevorzugt ist. Beispiele für den Liganden sind ein Halogenid, wie Chlorid, ein Carboxylat, wie Acetat, Octoat, Neodecanoat oder Laurat, und bevorzugt ein Carbonylat, besonders bevorzugt ein 1,3-Dicarbonylat, beispielsweise Acetylacetonat oder 2,2,6,6-Tetramethylheptan-3,5-dionat.

Der Ligand L der Formel (I) weist formal eine über die 1,3-Ketoamid-Struktur delokalisierte negative Ladung auf. Er kann daher in verschiedenen Grenzstrukturen, beispielsweise in den nachfolgend dargestellten Grenzstrukturen, gezeichnet werden. Alle möglichen Grenzstrukturen des Liganden L der Formel (I) werden im Rahmen der vorliegenden Erfindung als gleichwertig angesehen.

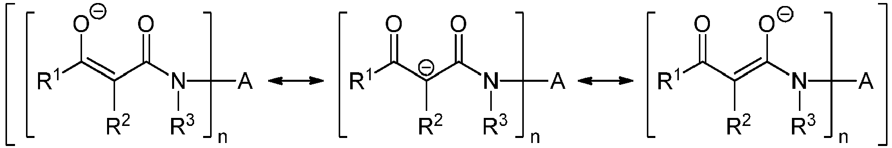

Der Index n in der Formel (I) ist 1, 2 oder 3, bevorzugt 1 oder 2 und besonders bevorzugt 1.

Die Liganden L der Formel (I) können gleich oder unterschiedlich sein. Besonders bevorzugt liegen gleiche Liganden L der Formel (I) vor, sofern mehr als ein Ligand L enthalten ist.

In der Formel (I) steht A für R⁴ oder einen Polyoxyalkylen-Rest oder einen Rest einer polyoxyalkylierten Verbindung. R⁴ wird nachstehend weiter erläutert. Der Polyoxyalkylen-Rest oder der Rest einer polyoxyalkylierten Verbindung können gegebenenfalls ein oder zwei endständige 1,3-Ketoamid-Gruppen der Formel 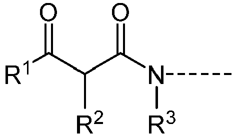 aufweisen, wobei R¹, R² und R³ wie für die Formel (I) definiert sind. Der Polyoxyalkylen-Rest oder der Rest einer polyoxyalkylierten Verbindung weist vorzugsweise ein Zahlenmittel des Molekulargewichts Mn von etwa 200 bis 5000 g/mol und besonders bevorzugt von etwa 200 bis 2000 g/mol auf. Es versteht sich, dass Mn sich auf das Polyoxyalkylen oder die polyoxyalkylierte Verbindung bezieht. Beispiele für Polyoxyalkylen oder eine polyoxyalkylierte Verbindung, von denen der Rest abgeleitet ist, sind Polyoxyethylen, Polyoxypropylen und Mischformen davon, sowie polyethoxylierte oder polypropoxylierte Verbindungen mit aktiven Wasserstoffatomen, wie beispielsweise polyethoxylierte oder polypropoxylierte Amine, Alkohole und Glykole.

In der Formel (I) stehen R¹ und R² unabhängig voneinander für einen Wasserstoff-Rest, für einen einwertigen gesättigten oder ungesättigten Kohlenwasserstoff-Rest mit 1 bis 10 Kohlenstoff-Atomen, oder zusammen für einen zweiwertigen Alkylen-Rest mit 3 bis 6 Kohlenstoffatomen.

Bei dem einwertigen gesättigten Kohlenwasserstoff-Rest mit 1 bis 10 Kohlenstoff-Atomen handelt es sich bevorzugt um einen Alkyl-Rest mit 1 bis 4 Kohlenstoffatomen, insbesondere einen Methyl-, Propyl-, Isopropyl- oder einen Butyl-Rest. Diese haben den Vorteil, dass die Metall-Komplexverbindung damit tendenziell flüssig oder gut löslich ist. Ganz besonders bevorzugt handelt es sich bei dem Alkyl-Rest mit 1 bis 4 Kohlenstoffatomen um einen Methyl-Rest. Bei dem einwertigen ungesättigten Kohlenwasserstoff-Rest mit 1 bis 10 Kohlenstoff-Atomen handelt es sich bevorzugt um einen Aryl-Rest, besonders bevorzugt um einen Phenyl-Rest. Unter einem zweiwertigen Alkylen-Rest mit 3 bis 6 Kohlenstoffatomen wird ein Rest der Formel -(CH₂)ₙ- verstanden, wobei n 3 bis 6, vorzugsweise 3 bis 4, und besonders bevorzugt 3, bedeutet.

In einer bevorzugten Ausführungsform bilden R¹ und R² zusammen einen zweiwertigen Alkylen-Rest mit 3 bis 4 Kohlenstoffatomen, insbesondere mit 3 Kohlenstoffatomen.

Besonders bevorzugt ist R² ein Wasserstoff-Rest, da die Metall-Komplexverbindung damit tendenziell besonders stabil ist. Sofern R¹ und R² nicht zusammen einen Alkylen-Rest bilden, ist R¹ bevorzugt ein einwertiger gesättigten oder ungesättigter Kohlenwasserstoff-Rest mit 1 bis 10 Kohlenstoff-Atomen, bevorzugter ein Alkyl-Rest mit 1 bis 4 Kohlenstoffatomen oder ein Aryl-Rest, besonders bevorzugt ein Methyl-, Propyl-, Isopropyl-, Butyl- oder Phenyl-Rest.

In der Formel (I) stehen R³ und, sofern A R⁴ ist, R⁴ unabhängig voneinander für einen Wasserstoff-Rest, einen einwertigen gesättigten Kohlenwasserstoff-Rest mit 1 bis 12 Kohlenstoffatomen, der gegebenenfalls ein oder mehrere Heteroatome enthält, einen Benzyl-Rest oder zusammen für einen zweiwertigen Alkylen-Rest mit 3 bis 6 Kohlenstoffatomen, der gegebenenfalls ein oder mehrere Heteroatome enthält.

Bei dem einwertigen gesättigten Kohlenwasserstoff-Rest mit 1 bis 12 Kohlenstoffatomen, der gegebenenfalls ein oder mehrere Heteroatome enthält, handelt es sich bevorzugt um einen Alkyl-Rest mit 1 bis 8 Kohlenstoffatomen, besonders bevorzugt um einen Methyl-, Ethyl-, Propyl-, Isopropyl-, Butyl-, Isobutyl-, 2-Butyl-, Hexyl-, 2-Ethylpentyl-, 2-Ethylhexyl- oder Octyl-Rest, einen Cycloalkyl-Rest mit 5 bis 6 Kohlenstoffatomen, bevorzugt mit 6 Kohlenstoffatomen, oder einen Alkylether-Rest mit 1 bis 4 Kohlenstoffatomen, besonders bevorzugt ein 2-Methoxyethyl- oder ein 2-(2-Methoxy)ethoxyethyl-Rest. Dies hat den Vorteil, dass die Zink(II)-Komplexverbindung damit tendenziell flüssig oder gut löslich ist.

Besonders bevorzugt steht R³ und R⁴ unabhängig voneinander für einen Wasserstoff-Rest, einen Alkyl-Rest mit 1 bis 8 Kohlenstoffatomen, einen Cycloalkyl-Rest mit 5 bis 6 Kohlenstoffatomen, einen Alkylether-Rest mit 1 bis 4 Kohlenstoffatomen oder einen Benzyl-Rest, wobei R³ bevorzugt ein Wasserstoff-, Methyl- oder Isopropyl-Rest ist.

Wenn R³ und R⁴ zusammen ein zweiwertiger Alkylen-Rest mit 3 bis 6 Kohlenstoffatomen, der gegebenenfalls ein oder mehrere Heteroatome enthält, sind, handelt es sich bevorzugt um einen zweiwertigen Alkylen-Rest der Formel -(CH₂)ₘ-X-(CH₂)ₒ- mit X = O, NR, wobei R ein einwertiger Alkyl-Rest mit 1 bis 4 Kohlenstoffatomen ist, oder S und m und o unabhängig voneinander eine ganze Zahl von 2 bis 4 sind, wobei die Summe von m und o 4 bis 6 ist, wobei es besonders bevorzugt ist, dass m und o jeweils 2 sind und X = O oder NR.

In einer besonders bevorzugten Ausführungsform ist der Ligand L der Formel (I) ein Ligand L1, worin
n 1 ist und A für R⁴ steht;
R¹ ein Alkyl-Rest mit 1 bis 4 Kohlenstoffatomen, insbesondere ein Methyl- oder ein Butyl-Rest, oder ein Aryl-Rest, insbesondere ein Phenyl-Rest, ist und R² ein Wasserstoff-Rest ist; oder R¹ und R² zusammen ein Alkyl-Rest mit 3 bis 4 Kohlenstoffatomen, insbesondere mit 3 Kohlenstoffatomen, ist; und
R³ und R⁴ unabhängig voneinander ein Alkyl-Rest mit 1 bis 8 Kohlenstoffatomen, besonders bevorzugt ein Methyl-, Ethyl-, Propyl-, Isopropyl-, Butyl-, Isobutyl-, Hexyl-, 2-Methylpentyl-, Octyl- oder 2-EthylhexylRest; oder ein Cycloalkyl-Rest mit 5 bis 6 Kohlenstoffatomen, besonders bevorzugt 6 Kohlenstoffatomen; oder einen Alkylether-Rest mit 1 bis 4 Kohlenstoffatomen, besonders bevorzugt ein 2-Methoxyethyl- oder ein 2-(2-Methoxy)ethoxyethyl-Rest sind; oder R³ und R⁴ zusammen ein zweiwertiger Alkylen-Rest der Formel
-(CH₂)ₘ-X-(CH₂)ₒ- sind, wobei X = O, NR, wobei R ein einwertiger Alkyl-Rest mit 1 bis 4 Kohlenstoffatomen ist, oder S und m und o unabhängig voneinander eine ganze Zahl von 2 bis 4 sind, wobei die Summe von m und o 4 bis 6 ist, wobei es besonders bevorzugt ist, dass m und o jeweils 2 sind und X = O oder NR.

In einer weiteren besonders bevorzugten Ausführungsform ist der Ligand L der Formel (I) ein Ligand L2, worin
n 1, 2 oder 3, insbesondere 1 oder 2, ist;
A für einen Polyoxyalkylen-Rest oder einen Rest einer polyoxyalkylierten Verbindung steht, wobei der Polyoxyalkylen-Rest oder der Rest einer polyoxyalkylierten Verbindung vorzugsweise ein Zahlenmittel des Molekulargewichts Mn von etwa 200 bis 5000 g/mol, und bevorzugt von etwa 200 bis 2000 g/mol, aufweist;
R¹ ein Alkyl-Rest mit 1 bis 4 Kohlenstoffatomen, insbesondere ein Methyl-, Propyl-, Isopropyl- oder Butyl-Rest, oder ein Aryl-Rest, insbesondere ein Phenyl-Rest, ist, und R² ein Wasserstoff-Rest ist; oder R¹ und R² zusammen ein Alkylen-Rest mit 3 bis 4 Kohlenstoffatomen, insbesondere mit 3 Kohlenstoffatomen, sind; und
R³ ein Wasserstoff-Rest, ein einwertiger gesättigter Kohlenwasserstoff-Rest mit 1 bis 12 Kohlenstoffatomen, der gegebenenfalls ein oder mehrere Heteroatome enthält, oder einen Benzyl-Rest ist.

Bevorzugt stellt die Zink(II)-Komplexverbindung der Formel Znₖ(L)ₓ(Y)₂ₖ₋ₙₓ eine Zink(II)-Komplexverbindung der Formel Zn(L1)ₓ(Y)₂₋ₓ dar, wobei der Ligand L1 wie vorstehend definiert ist. Bevorzugt steht x dabei für 2, da diese Komplexverbindungen besonders stabil sind. Sofern zwei oder mehr Liganden L1 vorliegen, insbesondere wenn vorzugsweise zwei Liganden L1 vorliegen, können diese gleich oder unterschiedlich sein. Besonders bevorzugt liegen zwei gleiche Liganden L1 vor.

Weiterhin bevorzugt stellt die Zink(II)-Komplexverbindung der Formel Znₖ(L)ₓ(Y)₂ₖ₋ₙₓ eine Zink(II)-Komplexverbindung der Formel Znₖ(L2)ₓ(Y)_{2k-nX} dar, wobei der Ligand L2 wie vorstehend definiert ist. Bevorzugt steht k dabei für eine ganze Zahl von 1 bis 5, besonders bevorzugt für 1, da diese Komplexverbindungen tendenziell eine niedrige Viskosität und eine gute Löslichkeit aufweisen. Weiterhin bevorzugt steht n dabei für 1 oder 2, da diese Komplexverbindungen tendenziell eine niedrige Viskosität und eine gute Löslichkeit aufweisen. Sofern zwei oder mehr Liganden L2 vorhanden sind, können diese gleich oder unterschiedlich sein.

Die Herstellung der Zink(II)-Komplexverbindung der Formel Znₖ(L)ₓ(Y)_{2k-nX} erfolgt bevorzugt durch Umsetzung eines 1,3-Ketoamids der Formel 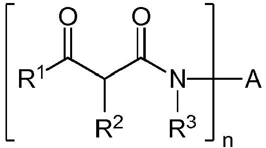 wobei R¹, R², R³, A und n wie in Formel (I) definiert sind, mit einem Zink(II)-Salz oder einem Zink(II)-Komplex. Bevorzugt ist der Einsatz von Zinkchlorid, Zinkacetat, und Zn(II)-bis(acetylacetonat), besonders bevorzugt von Zink(II)-bis(acetylacetonat).

Das 1,3-Ketoamid kann dabei in Bezug auf seine 1,3-Ketoamidgruppen stöchiometrisch oder bevorzugt überstöchiometrisch eingesetzt werden. Bevorzugt liegt das stöchiometrische Verhältnis zwischen dem Zink(II)-Salz oder Zink(II)-Komplex und den 1,3-Ketoamidgruppen im Bereich von 1:2 bis 1:6, besonders bevorzugt von 1:2,2 bis 1:4. Bei einem überstöchiometrischen Einsatz des 1,3-Ketoamids weist die Zink(II)-Komplexverbindung der Formel Znₖ(L)ₓ(Y)₂ₖ₋ₙₓ tendenziell eine erhöhte Hydrolysestabilität und eine niedrigere Viskosität auf und führt zu einer erhöhten Lagerstabilität der erfindungsgemäßen Zusammensetzung.

Die Herstellung der Zink(II)-Komplexverbindung der Formel Znₖ(L)ₓ(Y)₂ₖ₋ₙₓ erfolgt vorzugsweise dadurch, dass das Zink(II)-Salz oder der Zink(II)-Komplex mit dem 1,3-Ketoamid vermischt und die Mischung vorzugsweise unter Rühren während 1 bis 24 Stunden, bevorzugt etwa 3 Stunden, auf eine Temperatur von 50 bis 130°C, bevorzugt etwa 90°C, erwärmt wird. Anschließend wird das Reaktionsgemisch vorzugsweise im Vakuum von flüchtigen Bestandteilen befreit.

Das eingesetzte 1,3-Ketoamid wird vorzugsweise durch Umsetzung eines Amins oder Polyetheramins mit Diketen oder einem 1,3-Ketoester erhalten.

Bevorzugte Polyetheramine sind Polyoxyalkylenamine, vorzugsweise mit einem Zahlenmittel des Molekulargewichts Mn von etwa 200 bis 5000 g/mol, wie sie kommerziell unter den Handelsnamen Jeffamine^{®} (von Huntsman), Polyetheramine (von BASF) oder PC Amine^{®} (von Nitroil) erhältlich sind. Besonders bevorzugte Typen sind Jeffamine^{®} M-600, Jeffamine^{®} M-1000, Jeffamine^{®} M-2000, Jeffamine^{®} M-2070, Jeffamine^{®} XTJ-249, Jeffamine^{®} XTJ-435, Jeffamine^{®} XTJ-436, Jeffamine^{®} XTJ-581, Jeffamine^{®} D-230, Jeffamine^{®} D-400, Jeffamine^{®} D-2000, Jeffamine^{®} D-4000, Jeffamine^{®} XTJ-582, Jeffamine^{®} XTJ-578, Jeffamine^{®} HK-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-533, Jeffamine^{®} XTJ-536, Jeffamine^{®} XTJ-542, Jeffamine^{®} XTJ-548, Jeffamine^{®} XTJ-559, Jeffamine^{®} SD-231, Jeffamine^{®} SD-401, Jeffamine^{®} SD-2001, Jeffamine^{®} T-403, Jeffamine^{®} T-3000, Jeffamine^{®} T-5000, Jeffamine^{®} XTJ-566 und Jeffamine^{®} ST-404 (alle von Huntsman), sowie dazu analoge Typen von BASF und Nitroil.

Besonders bevorzugt sind Polyoxyalkylenamine mit einem Zahlenmittel des Molekulargewichts Mn von etwa 200 bis 2000 g/mol. Ganz besonders bevorzugt sind Polyoxypropylenamine, insbesondere Polyoxypropylenmonoamine und Polyoxypropylendiamine, welche gegebenenfalls Anteile anderer Oxyalkyleneinheiten wie Oxybutylen- und insbesondere Oxyethyleneinheiten enthalten. Als Polyoxypropylenmonoamine eignen sich insbesondere die Typen Jeffamine^{®} M-600, Jeffamine^{®} M-1000 und Jeffamine^{®} XTJ-581. Als Polyoxypropylendiamine eignen sich insbesondere die Typen Jeffamine^{®} D-230, Jeffamine^{®} D-400, Jeffamine^{®} D-2000, Jeffamine^{®} XTJ-582, Jeffamine^{®} XTJ-578, Jeffamine^{®} SD-231, Jeffamine^{®} SD-401 und Jeffamine^{®} SD-2001.

Bevorzugte 1,3-Ketoester sind Alkylacetoacetate, besonders bevorzugt Methylacetoacetat, Ethylacetoacetat und tert. Butylacetoacetat.

Vorzugsweise erfolgt die Herstellung des 1,3-Ketoamids dadurch, dass eine Mischung des Amins oder Polyetheramins und des Diketens oder des 1,3-Ketoesters vorzugsweise unter Rühren bei 100 bis 500 mbar, besonders bevorzugt etwa 300 mbar, vorzugsweise während 1 bis 20 Stunden, besonders bevorzugt etwa 4 Stunden, auf eine Temperatur von vorzugsweise 50 bis 150°C, besonders bevorzugt etwa 110°C, erwärmt wird. Anschließend wird das Reaktionsgemisch vorzugsweise im Vakuum von flüchtigen Bestandteilen befreit.

Das 1,3-Ketoamid kann vorzugsweise auch dadurch gewonnen werden, dass man das Diketen oder den 1,3-Ketoester vorzugsweise langsam zu einem auf vorzugsweise 80 bis 160°C, besonders bevorzugt etwa 130°C, erwärmten Amin oder Polyetheramin gibt und das Reaktionsgemisch vorzugsweise weitere 10 bis 30 Stunden, besonders bevorzugt etwa 18 Stunden, bei 80 bis 160°C, vorzugsweise etwa 130°C, hält. Anschließend wird vorzugsweise auf Raumtemperatur gekühlt und das Gemisch vorzugsweise im Vakuum von flüchtigen Bestandteilen befreit. Der erhaltene Rückstand wird vorzugsweise in Ethylacetat gelöst, die Lösung mit Salzsäure gewaschen, mit Magnesiumsulfat getrocknet und vollständig eingeengt.

Die Zusammensetzung umfasst ferner mindestens ein Silangruppen-haltiges Polymer. Es können ein oder mehrere Silangruppen-haltige Polymere eingesetzt werden. Das Polymer enthält mindestens eine, bevorzugt mindestens zwei, Silangruppe(n). Das Silangruppen-haltige Polymer weist im Mittel im Allgemeinen mehr als 1, bevorzugt 1,3 bis 4, bevorzugt 1,5 bis 3, besonders bevorzugt 1,7 bis 2,8 Silangruppen pro Molekül auf. Die Silangruppen sind bevorzugt endständig.

Das Silangruppen-haltige Polymer, z.B. der Silangruppen-haltige Polyether oder der Alkoxysilangruppen-haltige Polyether, weist bevorzugt ein Zahlenmittel des Molekulargewichts im Bereich von 1000 bis 30'000 g/mol, insbesondere von 2000 bis 20'000 g/mol, auf. Das Silangruppen-haltige Polymer, z.B. der Silangruppen-haltige Polyether oder der Alkoxysilangruppen-haltige Polyether, weist bevorzugt ein Silan-Equivalentgewicht von 300 bis 25'000 g/Eq, insbesondere von 500 bis 15'000 g/Eq, auf.

Die Silangruppen des Silangruppen-haltigen Polymers weisen bevorzugt zwei oder drei, besonders bevorzugt drei, hydrolysierbare Reste am Silicium-Atom auf. Die hydrolysierbaren Reste können gleich oder unterschiedlich sein; bevorzugt sind sie gleich.

Die hydrolysierbaren Reste stellen insbesondere Alkoxy-, Acetoxy-, Ketoximato-, Amido- oder Enoxy-Reste mit 1 bis 13 Kohlenstoffatomen dar. Bevorzugt sind Alkoxy-Reste. Bevorzugte Alkoxy-Reste weisen 1 bis 4 Kohlenstoffatome auf. Besonders bevorzugt sind Methoxy- und Ethoxy-Reste. Die Silangruppen des Silangruppen-haltigen Polymers stellen somit bevorzugt Alkoxysilangruppen, insbesondere Dialkoxysilangruppen und besonders bevorzugt Trialkoxysilangruppen dar. Bevorzugt sind Dimethoxysilangruppen und Diethoxysilangruppen und besonders bevorzugt Trimethoxysilangruppen und Triethoxysilangruppen.

Als Silangruppen-haltiges Polymer bevorzugt sind Silangruppen-haltige Polyether, Poly(meth)acrylate, Polyolefine, Polyester, Polyamide, Polyurethane oder Mischformen dieser Polymere. Besonders bevorzugt sind Silangruppen-haltige Polyether, Poly(meth)acrylate, Polyolefine und Polyester, insbesondere Silangruppen-haltige Polyether und Poly(meth)acrylate. Am meisten bevorzugt sind Silangruppen-haltige Polyether.

Als Silangruppen-haltiges Polymer besonders bevorzugt sind Alkoxysilangruppen-haltige Polyether, Poly(meth)acrylate, Polyolefine, Polyester, Polyamide, Polyurethane oder Mischformen dieser Polymere. Besonders bevorzugt sind Alkoxysilangruppen-haltige Polyether, Poly(meth)acrylate, Polyolefine und Polyester, insbesondere Alkoxysilangruppen-haltige Polyether und Poly(meth)acrylate. Am meisten bevorzugt sind Alkoxysilangruppen-haltige Polyether.

Der Alkoxysilangruppen-haltige Polyether enthält in der Polymerkette als Struktur-Einheiten Oxyalkylen-Einheiten, bevorzugt Oxy(C₂-C₄-alkylen)-Einheiten, wie Oxyethylen-, Oxypropylen- oder Oxybutylen-Einheiten, wobei Oxypropylen-Einheiten besonders bevorzugt sind. Die Polymerkette kann einen Typ von Oxyalkylen-Einheiten oder eine Kombination von zwei oder mehr unterschiedlichen Oxyalkylen-Einheiten, welche statistisch verteilt oder vorzugsweise blockweise angeordnet sein können, enthalten.

Der Silangruppen-haltige Polyether, bevorzugt der Alkoxysilangruppen-haltige Polyether, kann in der Polymerkette neben den Oxyalkylen-Einheiten funktionelle Gruppen aufweisen, insbesondere Harnstoffgruppen, Urethangruppen, Thiourethangruppen, Estergruppen und/oder Amidgruppen, bevorzugt Harnstoffgruppen und/oder Urethangruppen. Die funktionellen Gruppen können zur Verlängerung der Polymerkette und/oder zur Anbindung der Silangruppen, bevorzugt Alkoxysilangruppen, dienen.

Besonders geeignete Silangruppen-haltige Polyether, insbesondere Alkoxysilangruppen-haltige Polyether, sind abgeleitet von Polyoxyalkylenpolyolen, auch Polyetherpolyole oder Oligoetherole genannt, die gegebenenfalls über die genannten funktionellen Gruppen kettenverlängert werden und/oder an die gegebenenfalls funktionelle Gruppen zur Anbindung der Alkoxysilangruppen angebunden werden.

Die Polyoxyalkylenpolyole sind bevorzugt Polymerisationsprodukte von Ethylenoxid, 1,2-Propylenoxid, 1,2-oder 2,3-Butylenoxid, Oxetan, Tetrahydrofuran oder Mischungen davon, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxyethylen- und Polyoxypropylendi- und -triole. Speziell geeignet sind Polyoxyalkylendiole und -triole mit einem Ungesättigtheitsgrad tiefer als 0,02 mEq/g und mit einem Zahlenmittel des Molekulargewichts im Bereich von 1000 bis 30'000 g/mol, sowie Polyoxypropylendiole und -triole mit einem Zahlenmittel des Molekulargewichts von 400 bis 8000 g/mol.

Ebenfalls besonders geeignet sind sogenannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.

Das Silangruppen-haltige Polymer ist vorzugsweise erhältlich aus
- der Copolymerisation von (Meth)acrylsilanen mit nicht silanfunktionellen (Meth)acrylaten und/oder Olefinen, oder
- der Pfropfung von Polyolefinen oder Poly(meth)acrylaten mit Vinylsilanen oder (Meth)acrylsilanen, oder
- der Hydrosilylierung von endständige Allylgruppen aufweisenden Polymeren mit Hydrosilanen, oder
- der Michael-artigen Umsetzung von endständige (Meth)acrylgruppen aufweisenden Polymeren mit Aminosilanen oder Mercaptosilanen, oder
- der Umsetzung von Silangruppen aufweisenden Polymeren aus der Copolymerisation von Alkylenoxiden und Epoxysilanen mit Polyisocyanaten, oder
- der Umsetzung von endständige Hydroxylgruppen aufweisenden Polymeren, insbesondere Polyolen oder OH-terminierte Polyurethan-Prepolymere, mit Isocyanatosilanen, oder
- der Umsetzung von endständige Isocyanatgruppen aufweisenden Polymeren, insbesondere NCO-terminierten Polyurethan-Prepolymeren (NCO-Prepolymeren), mit Aminosilanen, Hydroxysilanen oder Mercaptosilanen.

Besonders bevorzugt ist das Silangruppen-haltige Polymer erhältlich aus der Umsetzung von NCO-Prepolymeren mit Aminosilanen oder Hydroxysilanen oder Mercaptosilanen.

Geeignete NCO-Prepolymere sind insbesondere erhältlich aus der Umsetzung von Polyolen mit Polyisocyanaten, insbesondere Diisocyanaten. Die Umsetzung kann dadurch erfolgen, dass das Polyol und das Polyisocyanat mit üblichen Verfahren, insbesondere bei Temperaturen von 50 °C bis 100 °C, gegebenenfalls unter Mitverwendung geeigneter Katalysatoren, insbesondere Aminen, Bismut- oder Zinkverbindungen, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0,1 bis 5 Gew.-%, bevorzugt 0,2 bis 3 Gew.-%, bezogen auf das gesamte NCO-Prepolymer verbleibt. Bevorzugt sind NCO-Prepolymere mit dem genannten Gehalt an freien Isocyanatgruppen, welche aus der Umsetzung von Polyolen mit Polyisocyanaten in einem NCO/OH-Verhältnis von 1,5 / 1 bis 2,5 / 1, insbesondere 1,8 / 1 bis 2,2 / 1, erhalten werden.

Als Polyol für die Herstellung des NCO-Prepolymers geeignet sind handelsübliche Polyole, insbesondere Polyetherpolyole, Polyesterpolyole, Polycarbonatpolyole, Poly(meth)acrylatpolyole und Polyolefinpolyole sowie Mischformen davon. Zusätzlich zu diesen Polyolen können kleine Mengen von niedrigmolekularen zwei- oder mehrwertigen Alkoholen mitverwendet werden. Als Polyisocyanat für die Herstellung des NCO-Prepolymers geeignet sind handelsübliche Polyisocyanate, insbesondere Diisocyanate, bevorzugt 1,6-Hexamethylendiisocyanat (HDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 2,4- und 2,6-Toluylendiisocyanat und beliebige Gemische dieser Isomeren (TDI), 4,4'-, 2,4'-und 2,2'-Diphenylmethandiisocyanat und beliebige Gemische dieser Isomeren (MDI), sowie Gemische dieser Polyisocyanate.

Die Umsetzung des NCO-Prepolymers mit dem Aminosilan oder Hydroxysilan oder Mercaptosilan wird bevorzugt so durchgeführt, dass die Amino- bzw. Hydroxyl- bzw. Mercaptogruppen des Silans im Verhältnis zu den Isocyanatgruppen des NCO-Prepolymers mindestens stöchiometrisch vorhanden sind. Das so entstehende Silangruppen-haltige Polymer ist frei von Isocyanatgruppen, was aus toxikologischer Sicht vorteilhaft ist. Die Umsetzung erfolgt bevorzugt bei einer Temperatur im Bereich von 20 °C bis 120 °C, insbesondere 40 °C bis 100 °C.

Geeignete Aminosilane zur Umsetzung des NCO-Prepolymers sind primäre und sekundäre Aminosilane. Bevorzugt sind sekundäre Aminosilane, insbesondere N-Butyl-(3-aminopropyl)trimethoxysilan und N-Ethyl-(3-amino-2-methylpropyl)trimethoxysilan sowie Addukte aus primären Aminosilanen, insbesondere 3-Aminopropyltrimethoxysilan und N-(2-Aminoethyl)-3-aminopropyltrimethoxysilan, und Michael-Akzeptoren, insbesondere Acrylaten und Maleinsäurediestern, sowie deren Analoga mit Ethoxy- anstelle von Methoxygruppen. Besonders bevorzugte Aminosilane sind die Addukte aus 3-Aminopropyltrimethoxysilan oder 3-Aminopropyltriethoxysilan und Maleinsäurediethylester.

Geeignete Hydroxysilane zur Umsetzung des NCO-Prepolymers sind insbesondere Hydroxysilane, welche eine sekundäre Hydroxylgruppe aufweisen. Bevorzugt sind Hydroxysilane erhältlich aus
- der Umsetzung von Epoxiden mit sekundären Aminosilanen, oder
- der Umsetzung von Epoxysilanen mit sekundären Aminen, oder
- der Umsetzung von primären Aminosilanen mit Lactonen oder cyclischen Carbonaten.

Geeignete Mercaptosilane zur Umsetzung des NCO-Prepolymers sind insbesondere 3-Mercaptopropylsilane, bevorzugt 3-Mercaptopropyltrimethoxysilan und 3-Mercaptopropyltriethoxysilan.

Geeignete kommerziell erhältliche Silangruppen-haltige Polymere sind beispielsweise erhältlich unter den Markennamen EPION^{®} (von Kaneka; Silangruppen-haltiges Polyisobutylen), XMAP™ (von Kaneka, Typen SA100S, SA310S, SA420S; Silangruppen-haltiges Poly(meth)acrylat) Gemlac™ (von Kaneka; Silangruppen-haltiges Poly(meth)acrylat-Silicon), Vestoplast^{®} (von Evonik, Typen 206, EP2403, EP2412; Silangruppen-haltiges amorphes Polyalpha-olefin) sowie die weiter unten genannten Alkoxysilangruppen-haltigen Polyether.

Der bevorzugte Silangruppen-haltige Polyether, insbesondere der Alkoxysilangruppen-haltige Polyether, ist bevorzugt erhältlich aus
- der Hydrosilylierung von endständige Allylgruppen aufweisenden, gegebenenfalls kettenverlängerten Polyethern mit Hydrosilanen, oder
- der Michael-artigen Umsetzung von endständige (Meth)acrylgruppen aufweisenden, gegebenenfalls kettenverlängerten Polyethern mit Aminosilanen oder Mercaptosilanen, oder
- der Umsetzung von Alkoxysilangruppen aufweisenden Polyethern aus der Copolymerisation von Alkylenoxiden und Epoxysilanen mit Polyisocyanaten, oder
- der Umsetzung von endständige Hydroxylgruppen aufweisenden, gegebenenfalls kettenverlängerten Polyethern, insbesondere Polyetherpolyolen oder OH-terminierte Polyether-Polyurethan-Prepolymere, mit Isocyanatosilanen, oder
- der Umsetzung von endständige Isocyanatgruppen aufweisenden, gegebenenfalls kettenverlängerten Polyethern, insbesondere NCO-terminierten Polyether-Polyurethan-Prepolymeren (Polyether-NCO-Prepolymere), mit Aminosilanen, Hydroxysilanen oder Mercaptosilanen.

Besonders bevorzugt ist der Silangruppen-haltige Polyether, insbesondere der Alkoxysilangruppen-haltige Polyether erhältlich aus der Umsetzung von Polyether-NCO-Prepolymeren mit Aminosilanen oder Hydroxysilanen.

Geeignete Polyether-NCO-Prepolymere sind insbesondere erhältlich aus der Umsetzung von Polyetherpolyolen, insbesondere Polyoxyalkylendiolen oder Polyoxyalkylentriolen, bevorzugt Polyoxypropylendiolen oder Polyoxypropylentriolen, mit Polyisocyanaten. Geeignete Polyisocyanate und Umsetzungsbedingungen sind die für die Herstellung von NCO-Prepolymere als geeignet genannten.

Speziell geeignete Polyetherpolyole zur Herstellung des Polyether-NCO-Prepolymers sind Polyoxyalkylendiole oder Polyoxyalkylentriole mit einem Ungesättigtheitsgrad tiefer als 0,02 mEq/g, insbesondere tiefer als 0,01 mEq/g, und einem Zahlenmittel des Molekulargewichts im Bereich von 1000 bis 20'000 g/mol, sowie Polyoxypropylendiole und -triole mit einem Zahlenmittel des Molekulargewichts von 400 bis 8000 g/mol. Einzelheiten zu solchen Polyetherpolyolen wurden bereits vorstehend erläutert. Neben Polyetherpolyolen können anteilig auch andere Polyole eingesetzt werden, insbesondere Polyacrylatpolyole, sowie niedrigmolekulare zwei- oder mehrwertige Alkohole..

Geeignete Aminosilane und Hydroxysilane für die Umsetzung des Polyether-NCO-Prepolymers zum Silangruppen-haltigen Polyether, insbesondere Alkoxysilangruppen-haltigen Polyether, sind die für die Umsetzung von NCO-Prepolymeren als geeignet genannten.

Geeignete kommerziell erhältliche Alkoxysilangruppen-haltige Polyether sind beispielsweise erhältlich unter den Markennamen MS Polymer™ (von Kaneka; Typen S203H, S303H, S227, S810, MA903 und S943), MS Polymer™ bzw. Silyl™ (von Kaneka; Typen SAT010, SAT030, SAT200, SAX350, SAX400, SAX725, MAX450, MAX951), Excestar^{®} (von Asahi Glass Co.; Typen S2410, S2420, S3430, S3630), SPUR+* (von Momentive Performance Materials; Typen 1010LM, 1015LM, 1050MM), Vorasil™ (von Dow Chemical; Typen 602 und 604), Desmoseal^{®} (von Bayer Material Science; Typen S XP 2458, S XP 2636, S XP 2749, S XP 2774 und S XP 2821), TEGOPAC^{®} (von Evonik; Typen Seal 100, Bond 150, Bond 250), Polymer ST (von Hanse Chemie, Typen 47, 48, 61, 75, 77, 80, 81) und Geniosil^{®} STP (von Wacker Chemie; Typen E10, E15, E30, E35).

Es ist bevorzugt, dass die erfindungsgemäße Zusammensetzung frei von Isocyanatgruppen-haltigen Verbindungen ist. Die Isocyanatgruppe schließt dabei freie und blockierte Isocyanatgruppen ein. Insbesondere weist das Silangruppen-haltige Polymer vorzugsweise keine Isocyanatgruppe auf. Das Silangruppen-haltige Polymer ist auch vorzugsweise frei von alkoholischen OH-Gruppen, die an einem C-Atom gebunden sind.

Die erfindungsgemäße Zusammensetzung kann ferner ein oder mehrere Additive enthalten, z.B. diejenigen, die für silanterminierte Polymere üblich sind. Beispiele sind Additive ausgewählt aus einer Base als Co-Katalysator, einem Weichmacher, einem Füllstoff bzw. einen Verstärker, einem Rheologie-Additiv, einem Silan-Haftvermittler oder -Vernetzer, einem Trocknungsmittel und einem Stabilisator. Es können mindestens ein oder zwei oder mehr dieser optionalen Additive oder gegebenenfalls eine Kombination aller genannten Additive in der Zusammensetzung enthalten sein. Die optionalen Additive werden im Folgenden näher erläutert.

So kann die erfindungsgemäße Zusammensetzung bevorzugt weiterhin mindestens eine Base als Co-Katalysator enthalten, wobei es sich bevorzugt um eine starke Base handelt. Bevorzugte Beispiele für geeignete Basen sind ein Amidin, ein Guanidin oder eine Phosphazen-Base. Besonders bevorzugt sind Amidine und Guanidine, insbesondere 1,8-Diazabicyclo[5.4.0]undec-7-en (DBU) und 1,1,3,3-Tetramethylguanidin (TMG).

Die erfindungsgemäße Zusammensetzung kann weiterhin bevorzugt mindestens einen Weichmacher umfassen. Bevorzugte Beispiele für geeignete Weichmacher sind Ester organischer Carbonsäuren oder deren Anhydride, wie Phthalate, insbesondere Diisononylphthalat oder Diisodecylphthalat, hydrierte Phthalate, insbesondere Diisononyl-1,2-cyclohexandicarboxylat, Adipate, insbesondere Dioctyladipat, Azelate und Sebacate, Polyole, insbesondere Polyoxyalkylenpolyole oder Polyesterpolyole, organische Phosphor- und Sulfonsäureester oder Polybutene.

Die erfindungsgemäße Zusammensetzung kann bevorzugt weiterhin mindestens einen Füllstoff bzw. Verstärker umfassen. Bevorzugte Beispiele für den Füllstoff bzw. Verstärker sind Calciumcarbonat, wie gemahlene oder gefällte Calciumcarbonate, welche gegebenenfalls mit Stearaten beschichtet sind, insbesondere feinteiliges beschichtetes Calciumcarbonat, Russe, insbesondere industriell hergestellte Russe, die im Folgenden als "Russ" bezeichnet werden, sowie Kieselsäuren, insbesondere hochdisperse Kieselsäuren aus Pyrolyseprozessen.

Die erfindungsgemäße Zusammensetzung kann ferner bevorzugt mindestens ein Rheologie-Additiv umfassen, z.B. eine Harnstoffverbindung, ein Polyamidwachs oder eine pyrogene Kieselsäure.

Die erfindungsgemäße Zusammensetzung kann ferner bevorzugt mindestens einen Silan-Haftvermittler bzw. -Vernetzer umfassen. Bevorzugte Beispiele sind ein Aminosilan, ein Epoxysilan, ein (Meth)acrylsilan oder Oligomere dieser Silane.

Die erfindungsgemäße Zusammensetzung kann bevorzugt weiterhin mindestens ein Trocknungsmittel umfassen. Bevorzugte Beispiele sind Tetramethoxysilan, Tetraethoxysilan, Trimethoxymethylsilan, Triethoxymethylsilan, Trimethoxyvinylsilan, Triethoxyvinylsilan, Trimethoxyphenylsilan, Triethoxyphenylsilan, α-funktionelle Silane wie N-(Silylmethyl)-O-methylcarbamate, insbesondere N-(Methyldimethoxysilylmethyl)-O-methylcarbamat, Orthoameisensäureester, Calciumoxid oder Molekularsiebe.

Die erfindungsgemäße Zusammensetzung kann weiterhin mindestens einen Stabilisator gegen Wärme, Licht- und UV-Strahlung umfassen.

Die erfindungsgemäße Zusammensetzung kann einkomponentig oder mehrkomponentig, insbesondere zweikomponentig, formuliert sein. Bevorzugt ist sie einkomponentig formuliert.

Die erfindungsgemäße Zusammensetzung ist vorzugsweise eine Vergussmasse, eine Formmasse, ein Dichtstoff, ein Klebstoff, eine Beschichtungszusammensetzung, ein Primer oder eine Spachtelmasse.

Bevorzugte Anwendungsgebiete der erfindungsgemäßen Zusammensetzung sind als Dichtstoffe, Klebstoffe und Beschichtungszusammensetzungen für Anstriche, Lacke, Beläge und Beschichtungen für Bau- und Industrieanwendungen.

Die erfindungsgemäße Zusammensetzung kann in vielen Bereichen eingesetzt werden, beispielsweise als Dichtstoff, Klebstoff, Belag, Beschichtung, Lack, Voranstrich, Vergussmasse, Formteil, Folie oder Membran für Bau- und Industrieanwendungen, beispielsweise als Nahtabdichtung, Hohlraumversiegelung, Fugendichtstoff, Montageklebstoff, Karosserieklebstoff, Scheibenklebstoff, Sandwichelementklebstoff, Kaschierklebstoff, Laminatklebstoff, Verpackungsklebstoff, Holzklebstoff, Parkettklebstoff, Verankerungsklebstoff, Bodenbelag und -beschichtung, Balkon- und Dachbeschichtung, Betonschutzbeschichtung, Parkhausbeschichtung, Rohrbeschichtung, Korrosionsschutzbeschichtung, Textilbeschichtung, Primer, Dämpfungselement, Dichtungselement, Spachtelmasse, etc.

Nach der Aushärtung der Zusammensetzung durch Feuchtigkeit wird ein Produkt aus der ausgehärteten Zusammensetzung erhalten, das gegebenenfalls verklebte, abgedichtete, beschichtete Gegenstände oder Substrate umfasst, wobei die ausgehärtete Zusammensetzung bevorzugt ein elastischer Kunststoff ist. Die Erfindung betrifft daher auch ein Produkt, das eine erfindungsgemäße Zusammensetzung in ausgehärteter Form umfasst. Die ausgehärtete Zusammensetzung ist vorzugsweise ein elastischer Kunststoff.

Es folgen Beispiele zur weiteren Erläuterung der Erfindung, die die Erfindung aber in keiner Weise beschränken sollen.

### Beispiele

### Beschreibung der Messmethoden

Infrarotspektren wurden auf einem FT-IR Gerät 1600 von Perkin-Elmer gemessen (horizontale ATR-Messeinheit mit ZnSe-Kristall; Messfenster 4000-650 cm⁻¹). Flüssige Proben wurden unverdünnt als Filme aufgetragen, feste Proben wurden in CH₂Cl₂ gelöst. Die Absorptionsbanden sind in Wellenzahlen (cm⁻¹) angegeben.

¹H-NMR-Spektren wurden auf einem Spektrometer des Typs Bruker DPX-300 bei 300,13 MHz gemessen; die chemischen Verschiebungen δ sind angegeben in ppm relativ zu Tetramethylsilan (TMS). Echte und Pseudo-Kopplungsmuster wurden nicht unterschieden.

Die Viskosität wurde auf einem thermostatisierten Kegel-Platten-Viskosimeter Physica MCR 300 (Kegeldurchmesser 20 mm, Kegelwinkel 1°, Kegelspitze-Platten-Abstand 0,05 mm, Schergeschwindigkeit 0,1 bis 100 s⁻¹) bei einer Temperatur von 20 °C gemessen.

Unter Normklima wird eine Temperatur von 23±1 °C und 50±5% relative Luftfeuchtigkeit verstanden.

Die Hautbildungszeit (HBZ) wurde dadurch bestimmt, dass einige Gramm der Zusammensetzung in einer Schichtdicke von ca. 2 mm auf Pappkarton aufgetragen wurden und im Normklima die Zeitdauer gemessen wurde, bis beim leichten Antippen der Oberfläche der Zusammensetzung mittels einer Pipette aus LDPE erstmals keine Rückstände auf der Pipette mehr zurückblieben.

Die Oberflächenbeschaffenheit nach 24h Aushärtungszeit im Normklima wurde haptisch geprüft.

Zugfestigkeit, Bruchdehnung und E-Modul (bei 0-5% sowie bei 0-100% Dehnung) wurden gemäß DIN EN 53504 bei einer Zuggeschwindigkeit von 200 mm/min. gemessen.

### Herstellung von Zink(II)-Komplexverbindungen der Formel Znₖ(L)ₓ(Y)2ₖ₋ₙₓ

### Katalysator 1

In einem Rundkolben wurden 2,70 g getrocknetes Zink(II)-bis(acetylacetonat) und 5,65 g N,N-Dibutyl-3-oxoheptanamid (ca. 2 mol-Equivalente) vermischt und die Mischung unter Rühren während 3 Stunden auf 80 °C erwärmt. Darauf wurde das Reaktionsgemisch im Vakuum von den flüchtigen Bestandteilen befreit. Man erhielt 6,25 g eines gelben Öls.
¹H-NMR (CDCl₃): δ 0,8-1,0 (*m*, 18 H, CH₃CH₂), 1,25-1,4 (*m*, 12 H, CH₃CH₂), 1,45-1,65 (*m*, 12 H, CH₂CH₂CH₃), 2,1-2,2 (*t*, 4 H, CH₂CO), 3,1-3,2 (*m*, 4 H, NCH₂), 3,25-3,35 (*m*, 4 H, NCH₂), 4,75 (s, 2 H, CHCO).
FT-IR: 2954, 2929, 2870, 1552, 1511, 1461, 1430, 1393, 1369, 1290, 1223, 1102, 951, 768, 731.

### Katalysator 2

In einem Rundkolben wurden 5,68 g getrocknetes Zink(II)-bis(acetylacetonat) und 22,33 g N,N-Dibutyl-3-oxo-3-phenylpropanamid (ca. 4 mol-Equivalente) vermischt und die Mischung unter Rühren während 3 Stunden auf 80 °C erwärmt. Darauf wurde das Reaktionsgemisch im Vakuum von den flüchtigen Bestandteilen befreit. Man erhielt 23,83 g eines orangefarbenen Öls.
FT-IR: 2957, 2930, 2871, 1690, 1623, 1586, 1574, 1550, 1499, 1483, 1466, 1367, 1292, 1266, 1212, 1148, 1111, 1085, 1021, 969, 915, 760, 716, 690.

### Katalysator 3

In einem Rundkolben wurden 2,53 g Zink(II)-bis(acetylacetonat) Hydrat (enthält ca. 2 Equivalente Wasser) und 17,99 g Ligand L2-1 (siehe unten, ca. 3 mol-Equivalente) vermischt und die Mischung unter Rühren während 3 Stunden auf 90 °C erwärmt. Darauf wurde das Reaktionsgemisch im Vakuum von den flüchtigen Bestandteilen befreit. Man erhielt 18,24 g eines hellgelben Öls.
FT-IR: 3325, 2968, 2867, 1652, 1547, 1450, 1372, 1341, 1298, 1263, 1096, 1015, 964, 925, 866, 782.

### Der Ligand L2-1 wurde vorgängig wie folgt hergestellt:

In einem Rundkolben wurde 22,39 g tert.-Butyl-acetoacetat langsam zu 62,33 g eines auf 130 °C erwärmten Polyetheramins (Jeffamine^{®} M-600 von Huntsman) gegeben und das Reaktionsgemisch weitere 18 Stunden bei 130 °C gehalten. Darauf wurde es auf Raumtemperatur gekühlt und im Vakuum von den flüchtigen Bestandteilen befreit. Der erhaltene Rückstand wurde in Ethylacetat gelöst, die Lösung mit Salzsäure-Lösung (0,1 M) gewaschen, mit MgSO₄ getrocknet und vollständig eingeengt. Man erhielt 58,14 g eines hellgelben Öls.
FT-IR: 3323, 2969, 2867, 1720, 1649, 1547, 1452, 1371, 1342, 1297, 1095, 1013, 924, 817.

### Katalysator 4

In einem Rundkolben wurden 1,33 g Zink(II)-bis(acetylacetonat) Hydrat (enthält ca. 2 Equivalente Wasser) und 15,57 g Ligand L2-2 (siehe unten, ca. 3 mol-Equivalente 1,3-Ketoamidgruppen) vermischt und die Mischung unter Rühren während 3 Stunden auf 90 °C erwärmt. Darauf wurde das Reaktionsgemisch im Vakuum von den flüchtigen Bestandteilen befreit. Man erhielt 16,15 g eines hellgelben Öls.
FT-IR: 2969, 2930, 2866, 1718, 1637, 1587, 1517, 1450, 1372, 1341, 1296, 1259, 1094, 1014, 925, 866, 768.

### Der Ligand L2-2 wurde vorgängig wie folgt hergestellt:

In einem Rundkolben wurde eine Mischung von 41,92 g eines Polyetheramins (Jeffamine^{®} SD-2001 von Huntsman) und 7,80 g tert-Butyl-acetoacetat unter Rühren bei 300 mbar während etwa 4 Stunden auf 110 °C erwärmt. Darauf wurde das Reaktionsgemisch im Vakuum von den flüchtigen Bestandteilen befreit. Man erhielt 45,37 g eines hellgelben Öls.
FT-IR: 2939, 2868, 1737, 1589, 1202, 1449, 1371, 1269, 1217, 1092, 934, 906, 868, 800, 772.

### Herstellung von Silangruppen-haltigen Polymeren

### Alkoxysilangruppen-haltiger Polyether STP-1

Unter Feuchtigkeitsausschluss wurden 1000 g Polyol Acclaim^{®} 12200 (Polyoxypropylendiol mit niedrigem Ungesättigtheitsgrad, von Bayer; OH-Zahl 11,0 mg KOH/g), 43,6 g Isophorondiisocyanat (IPDI; Vestanat^{®} IPDI, von Evonik), 126,4 g Diisodecylphthalat (DIDP) und 0,1 g Bismuttris(neodecanoat) (10 Gew.-% in DIDP) unter stetigem Rühren auf 90 °C aufgeheizt und auf dieser Temperatur belassen, bis der titrimetrisch bestimmte Gehalt an freien Isocyanatgruppen einen stabilen Wert von 0,63 Gew.-% erreicht hatte. Anschließend wurden 63,0 g N-(3-Trimethoxysilylpropyl)-amino-bernsteinsäurediethylester (Addukt aus 3-Aminopropyltrimethoxysilan und Maleinsäurediethylester; hergestellt nach den Angaben in US 5,364,955) eingemischt und die Mischung bei 90 °C solange gerührt, bis mittels FT-IR-Spektroskopie kein freies Isocyanat mehr nachgewiesen wurde. Der so erhaltene Trimethoxysilangruppen-haltige Polyether mit einem Silan-Equivalentgewicht von ca. 6880 g/Eq (aus den Einsatzmengen berechnet) wurde auf Raumtemperatur abgekühlt und unter Ausschluss von Feuchtigkeit aufbewahrt.

### Alkoxysilangruppen-haltiger Polyether STP-2

Unter Feuchtigkeitsausschluss wurden 1000 g Polyol Acclaim^{®} 12200 (Polyoxypropylendiol mit niedrigem Ungesättigtheitsgrad, von Bayer; OH-Zahl 11,0 mg KOH/g), 43,6 g Isophorondiisocyanat (IPDI; Vestanat^{®} IPDI, von Evonik), 126,4 g Diisodecylphthalat (DIDP) und 0,1 g Bismuttris(neodecanoat) (10 Gew.-% in DIDP) unter stetigem Rühren auf 90 °C aufgeheizt und auf dieser Temperatur belassen, bis der titrimetrisch bestimmte Gehalt an freien Isocyanatgruppen einen stabilen Wert von 0,64 Gew.-% erreicht hatte. Anschließend wurden 70,6 g N-(3-Triethoxysilylpropyl)-amino-bernsteinsäurediethylester (Addukt aus 3-Aminopropyltriethoxysilan und Maleinsäurediethylester) eingemischt und die Mischung bei 90 °C solange gerührt, bis mittels FT-IR-Spektroskopie kein freies Isocyanat mehr nachgewiesen wurde. Der so erhaltene Triethoxysilangruppen-haltige Polyether mit einem Silan-Equivalentgewicht von ca. 6920 g/Eq (aus den Einsatzmengen berechnet) wurde auf Raumtemperatur abgekühlt und unter Ausschluss von Feuchtigkeit aufbewahrt.

### Verwendung von Zink(II)-Komplexverbindungen in Silangruppen-haltigem Polymer und entsprechende Zusammensetzungen

### Beispiele 1 bis 4 und Vergleichsbeispiele V1 bis V4

Ein Zusammensetzung aus 96,5 Gewichtsteilen Alkoxysilangruppen-haltigem Polyether STP-1, 0,5 Gewichtsteilen Vinyltrimethoxysilan (VTMO) und 3,0 Gewichtsteilen 3-Aminopropyltrimethoxysilan (AMMO) wurde mit verschiedenen Katalysatoren gemäß nachstehender Tabelle 1 vermengt und die Mischung auf Viskosität sowie Hautbildungszeit (HBZ) im Normklima, vor und nach Lagerung, geprüft. Die Hautbildungszeit wurde als Maß für die Aktivität des Katalysators in Bezug auf die Vernetzungsreaktion der Silangruppen, d.h. für die Vernetzungsgeschwindigkeit, gewertet. Die Zunahme der Viskosität sowie der Hautbildungszeit wurde als Maß für die Lagerstabilität gewertet,. Die Ergebnisse sind ebenfalls in Tabelle 1 wiedergegeben.

Als Katalysatoren wurden die vorstehend hergestellten Katalysatoren 1 und 2 mit oder ohne Zugabe von einer Base als Co-Katalysator eingesetzt. Zum Vergleich wurden entsprechende Zusammensetzung ohne Katalysator oder mit Vergleichskatalysatoren Tyzor^{®} IBAY (Bis(ethylacetoacetato)-diisobutoxytitan(IV), von DuPont), Zn(neodecanoat)₂ (Zink(II)bis-neodecanoat) und Zn(acac)₂ (Zink(II)-bis(acetylacetonat)) geprüft (Vergleichsbeispiele 1 bis 4, als V1 bis V4 bezeichnet).

**Tabelle 1**

| Bsp. | Katalysator | Konz.¹⁾ | Viskosität²⁾ frisch | Viskosität²⁾ gelagert³⁾ | Viskositätszunahme | HBZ (min) frisch gelagert³⁾ | |
|---|---|---|---|---|---|---|---|
| V1 | - | - | 32,7 | 30,4 | -7% | 100 | 120 |
| V2 | Tyzor^{®} IBAY | 2,0 | 40,4 | 49,5 | 23% | 45 | 100 |
| V3 | Zn(neodecanoat)₂ | 2,0 | 31,9 | 32,2 | 1% | 65 | 90 |
| V4 | Zn(acac)₂⁴⁾ | 2,0 | 31,5 | 45,7 | 45% | 58 | 90 |
| 1 | Katalysator 1 | 2,0 | 32,5 | 54,7 | 68% | 37 | 51 |
| 2 | Katalysator 2 | 2,0 | 32,3 | 38,2 | 18% | 42 | 50 |
| 3 | Katalysator 2 | 1,0 | 30,5 | 38,3 | 26% | 37 | 46 |
| | DBU | 0,5 | | | | | |
| 4 | Katalysator 2 | 1,0 | 32,2 | 34,4 | 7% | 30 | 52 |
| | P₁-tBu-tris | 0,5 | | | | | |

| | | | | | | | |
|---|---|---|---|---|---|---|---|
| ¹⁾mmol Metallatome bzw. Amidingruppen bzw. Phosphazengruppen auf 100 g Alkoxysilangruppen-haltigen Polyether STP-1 ²⁾ in Pa·s. ³⁾ während 7 Tagen bei 60 °C in geschlossenem Gebinde ⁴⁾ als Lösung (20 Gew.-%) in N-Methylpyrrolidon. | | | | | | | |

Die eingesetzten Zink(II)-Komplexverbindungen der Formel Znₖ(L)ₓ,(Y)₂ₖ₋ₙₓ weisen eine höhere Aktivität (pro mol-Equivalent) auf als die Vergleichskatalysatoren Tyzor^{®} IBAY, Zn(neodecanoat)₂ und Zn(acac)₂. Die Aktivität lässt sich durch Kombination mit DBU (1,8-Diazabicyclo[5.4.0]undec-7-en) oder P₁-tBu-tris (=P₁-tBu-tris(tetramethylen), einer Phosphazen-Base) noch verstärken. Die Lagerstabilität ist teilweise ebenfalls besser, insbesondere bei Katalysator 2, wo der Ligand L im Überschuss vorliegt.

### Beispiele 5 bis 8 und Vergleichsbeispiele V5 bis V8

Eine Zusammensetzung aus 95,9 Gewichtsteilen Alkoxysilangruppen-haltigem Polyether STP-2, 0,4 Gewichtsteilen Vinyltriethoxysilan (VTEO) und 3,7 Gewichtsteilen N-(2-Aminoethyl)-3-aminopropyl-triethoxysilan (DAEO) wurde mit verschiedenen Katalysatoren gemäß untenstehender Tabelle 2 vermengt und die Mischung wie oben beschrieben auf Viskosität und Hautbildungszeit (HBZ) sowie zusätzlich auf Oberflächenbeschaffenheit nach 24h Aushärtungszeit im Normklima geprüft. Vergleichsbeispiele sind als V5 bis V8 gekennzeichnet.

**Tabelle 2**

| Bsp. | Katalysator | Konz.¹⁾ | Viskosität²⁾ frisch | Viskosität²⁾ gelagert³⁾ | Viskositätszunahme | HBZ | | Oberfläche nach 24h |
|---|---|---|---|---|---|---|---|---|
| | | | | | | frisch | gelagert³⁾ | |
| V5 | DBTDL | 0,4 | 65,2 | 68,9 | 6% | 3h 10' | 3h 30' | leicht klebrig |
| V6 | Tyzor^{®} IBAY | 3,3 | 80,2 | 81,6 | 2% | 24h | 24h | stark klebrig |
| V7 | Tyzor^{®} IBAY | 1,6 | 65,4 | 71,5 | 9% | 2h 10' | 5h | klebrig |
| | DBU | 1,6 | | | | | | |
| V8 | Zn(acac)₂⁴⁾ | 3,3 | 58,5 | 69,7 | 19% | 5h 30' | 5h 40' | klebrig |
| 5 | Katalysator 1 | 3,3 | 59,9 | 69,8 | 17% | 3h 05' | 8h | leicht klebrig |
| 6 | Katalysator 2 | 3,3 | 60,2 | 63,7 | 6% | 4h | 4h | leicht klebrig |
| 7 | Katalysator 1 | 1,6 | 64,3 | 69,5 | 8% | 2h 10' | 2h 50' | trocken |
| | DBU | 1,6 | | | | | | |
| 8 | Katalysator 2 | 1,6 | 61,1 | 68,4 | 12% | 2h 45' | 2h 50' | trocken |
| | DBU | 1,6 | | | | | | |

| | | | | | | | | |
|---|---|---|---|---|---|---|---|---|
| ¹⁾ mmol Metallatome bzw. Amidingruppen bzw. Phosphazengruppen auf 100 g Alkoxysilangruppen-haltigen Polyether STP-2 ²⁾ in Pa·s ³⁾ während 7 Tagen bei 60 °C in geschlossenem Gebinde 4) als Lösung (20 Gew.-%) in N-Methylpyrrolidon. | | | | | | | | |

Die eingesetzten Zink(II)-Komplexverbindungen der Formel Znₖ(L)ₓ(Y)₂ₖ₋ₙₓ weisen im langsam vernetzenden Triethoxysilangruppen-haltigen Polyether eine deutlich höhere Aktivität (pro mol-Equivalent) auf als die Vergleichskatalysatoren Tyzor IBAY und Zn(acac)₂. In Kombination mit DBU werden sogar deutlich kürzere Hautbildungszeiten erreicht als mit dem Organozinn-Katalysator DBTDL (Dibutylzinn(IV)-dilaurat). Anhand der Oberflächenklebrigkeit wird sichtbar, dass die Vernetzung der Vergleichsmischungen mit Tyzor^{®} IBAY und Zn(acac)₂ nach 24h noch nicht abgeschlossen ist. Mit den Zink(II)-Komplexverbindungen der Formel Znₖ(L)ₓ(Y)₂ₖ₋ₙₓ hingegen ist die Oberfläche nach 24h nur noch wenig klebrig, ähnlich wie mit DBTDL oder sogar besser.

### Beispiele 9 bis 12 und Vergleichsbeispiele V9 bis V12

In einem Planetenmischer wurden 37,6 Gewichtsteile Alkoxysilangruppen-haltiger Polyether STP-1, 60,0 Gewichtsteile gemahlene Kreide (Omyacarb^{®} 5 GU), 1,2 Gewichtsteile Vinyltrimethoxysilan (VTMO), 1,2 Gewichtsteile 3-Aminopropyltrimethoxysilan (AMMO) sowie verschiedene Katalysatoren gemäß untenstehender Tabelle 3 vermengt und die Mischung auf Hautbildungszeit (HBZ) im Normklima geprüft. Weiterhin wurde von der Mischung ein Film von 2 mm Dicke hergestellt, während 7 Tagen im Normklima aushärten gelassen und auf mechanische Eigenschaften geprüft. Die Vergleichsbeispiele sind als V9 bis V12 gekennzeichnet.

**Tabelle 3**

| Bsp | Katalysator | Konz.¹⁾ | HBZ | Zugfestigkeit (MPa) | Bruchdehnung | E-Modul 0-5% (MPa) | E-Modul 0-100% (MPa) |
|---|---|---|---|---|---|---|---|
| V9 | - | - | 3h | 2,4 | 130% | 4,8 | 2,2 |
| V10 | Tyzor^{®} IBAY | 1,2 | 40' | 2,4 | 140% | 4,5 | 2,2 |
| V11 | Zn(neodecanoat)₂ | 1,2 | 92' | 3,2 | 110% | 6,0 | 3,1 |
| V12 | Zn(acac)₂²⁾ | 1,2 | 52' | 2,9 | 130% | 5,2 | 2,6 |
| 9 | Katalysator 1 | 1,2 | 22' | 2,5 | 170% | 4,4 | 2,2 |
| 10 | Katalysator 2 | 1,2 | 40' | 2,7 | 150% | 4,5 | 2,4 |
| 11 | Katalysator 2 | 0,6 | 28' | 2,6 | 120% | 5,0 | 2,5 |
| | DBU | 0,4 | | | | | |
| 12 | Katalysator 2 | 0,6 | 20' | 2,7 | 130% | 5,1 | 2,5 |
| | P₁-tBu-tris | 0,4 | | | | | |

| | | | | | | | |
|---|---|---|---|---|---|---|---|
| ¹⁾ mmol Metallatome bzw. Amidingruppen bzw. Phosphazengruppen auf 100 g Alkoxysilangruppen-haltigen Polyether STP-1 ²⁾ als Lösung (20 Gew.-%) in N-Methylpyrrolidon. | | | | | | | |

Die erfindungsgemäßen Zusammensetzungen umfassend eine Zink(II)-Komplexverbindung der Formel Znₖ(L)ₓ(Y)₂ₖ₋ₙₓ als Katalysator härten schnell zu einem mechanisch guten elastischen Material aus.

### Beispiele 13 bis 15

In einem Planetenmischer wurden 70,8 Gewichtsteile Alkoxysilangruppen-haltiger Polyether STP-1, 27,5 Gewichtsteile gemahlene Kreide (Omyacarb^{®} 5 GU), 0,3 Gewichtsteile Vinyltrimethoxysilan (VTMO), 1,4 Gewichtsteile 3-Aminopropyltrimethoxysilan (AMMO) sowie die Katalysatoren 2, 3 und 4 wie vorstehend hergestellt gemäß untenstehender Tabelle 4 vermengt und die Mischung auf Hautbildungszeit (HBZ) im Normklima geprüft. Weiterhin wurde von der Mischung ein Film von 2 mm Dicke hergestellt, während 7 Tagen im Normklima aushärten gelassen und auf mechanische Eigenschaften geprüft.

**Tabelle 4**

| Bsp | Katalysator | Konz.¹⁾ | HBZ | Zugfestigkeit (MPa) | Bruchdehnung | E-Modul 0-5% (MPa) | E-Modul 0-100% (MPa) |
|---|---|---|---|---|---|---|---|
| 13 | Katalysator 2 DBU | 0,27 0,20 | 37' | 1,6 | 160% | 1,8 | 0,9 |
| 14 | Katalysator 3 | 0,27 | 54' | 1,5 | 160% | 1,8 | 0,9 |
| | DBU | 0,20 | | | | | |
| 15 | Katalysator 4 | 0,27 | 60' | 1,6 | 170% | 1,8 | 0,9 |
| | DBU | 0,20 | | | | | |

| | | | | | | | |
|---|---|---|---|---|---|---|---|
| ¹⁾ mmol Metallatome bzw. Amidingruppen bzw. Phosphazengruppen auf 100 g Alkoxysilangruppen-haltigen Polyether STP-1 | | | | | | | |

Die erfindungsgemäßen Zusammensetzungen umfassend eine Zink(II)-Komplexverbindung der Formel Znₖ(L)ₓ(Y)₂ₖ₋ₙₓ gemäß der bevorzugten Zink(II)-Komplexverbindung Zn(L1)ₓ(Y)₂₋ₓ (Beispiel 13) oder der bevorzugten Zink(II)-Komplexverbindung Znₖ(L2)ₓ(Y)₂ₖ₋ₙₓ (Beispiele 14 und 15) als Katalysator in Kombination mit DBU härten vergleichbar schnell zu einem mechanisch guten elastischen Material aus.

## Patentansprüche

1. Verwendung einer Zink(II)-Komplexverbindung der Formel Znₖ(L)ₓ(Y)₂ₖ₋ₙₓ, wobei k für eine ganze Zahl von 1 bis 10 steht, x für 1, 2, 3 oder 4 steht, n dem Wert n in der nachstehenden Formel (I) des Liganden L entspricht, Y für einen einfach negativ geladenen Liganden steht und L für einen Liganden der Formel (I) steht, 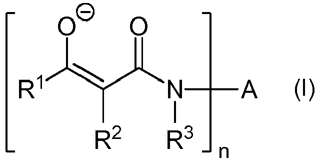 wobei
n für 1, 2 oder 3 steht,
A für R⁴ oder einen Polyoxyalkylen-Rest oder einen Rest einer polyoxyalkylierten Verbindung gegebenenfalls mit einer oder zwei endständigen 1,3-Ketoamid-Gruppen der Formel 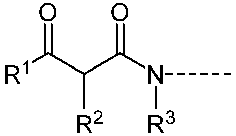 wobei R¹, R² und R³ wie nachstehend definiert sind, steht,
R¹ und R² unabhängig voneinander ein Wasserstoff-Rest oder ein einwertiger gesättigter oder ungesättigter Kohlenwasserstoff-Rest mit 1 bis 10 Kohlenstoff-Atomen sind oder zusammen ein zweiwertiger Alkylen-Rest mit 3 bis 6 Kohlenstoffatomen sind, und
R³ und R⁴ unabhängig voneinander ein Wasserstoff-Rest oder ein einwertiger gesättigter Kohlenwasserstoff-Rest mit 1 bis 12 Kohlenstoffatomen, der gegebenenfalls ein oder mehrere Heteroatome enthält, sind oder zusammen ein zweiwertiger Alkylen-Rest mit 3 bis 6 Kohlenstoffatomen, der gegebenenfalls ein oder mehrere Heteroatome enthält, sind,
als Katalysator für die Vernetzung von Silangruppen-haltigen Polymeren mittels Feuchtigkeit.

2. Zusammensetzung, umfassend
mindestens ein Silangruppen-haltiges Polymer und
mindestens eine Zink(II)-Komplexverbindung der Formel Znₖ(L)ₓ(Y)₂ₖ₋ₙₓ, wobei k für eine ganze Zahl von 1 bis 10 steht, x für 1, 2, 3 oder 4 steht, n dem Wert n in der nachstehenden Formel (I) des Liganden L entspricht, Y für einen einfach negativ geladenen Liganden steht und L für einen Liganden der Formel (I) steht, 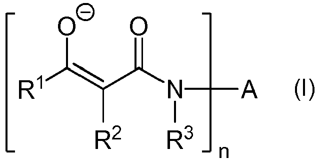 wobei
n für 1, 2 oder 3 steht,
A für R⁴ oder einen Polyoxyalkylen-Rest oder einen Rest einer polyoxyalkylierten Verbindung gegebenenfalls mit einer oder zwei endständigen 1,3-Ketoamid-Gruppen der Formel 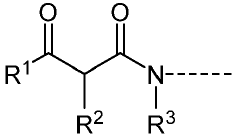 wobei R¹, R² und R³ wie nachstehend definiert sind, steht,
R¹ und R² unabhängig voneinander ein Wasserstoff-Rest oder ein einwertiger gesättigter oder ungesättigter Kohlenwasserstoff-Rest mit 1 bis 10 Kohlenstoff-Atomen sind oder zusammen ein zweiwertiger Alkylen-Rest mit 3 bis 6 Kohlenstoffatomen sind, und
R³ und R⁴ unabhängig voneinander ein Wasserstoff-Rest oder ein einwertiger gesättigter Kohlenwasserstoff-Rest mit 1 bis 12 Kohlenstoffatomen, der gegebenenfalls ein oder mehrere Heteroatome enthält, sind oder zusammen ein zweiwertiger Alkylen-Rest mit 3 bis 6 Kohlenstoffatomen, der gegebenenfalls ein oder mehrere Heteroatome enthält, sind.

3. Zusammensetzung nach Anspruch 2, wobei der Ligand L der Formel (I) ein Ligand L1 ist, worin
n 1 ist und A für R⁴ steht;
R¹ ein Alkyl-Rest mit 1 bis 4 Kohlenstoffatomen oder ein Aryl-Rest ist und R² ein Wasserstoff-Rest ist; oder R¹ und R² zusammen ein Alkylen-Rest mit 3 bis 4 Kohlenstoffatomen sind;
R³ und R⁴ unabhängig voneinander ein Alkyl-Rest mit 1 bis 8 Kohlenstoffatomen oder ein Cycloalkyl-Rest mit 5 bis 6 Kohlenstoffatomen oder ein Alkylether-Rest mit 1 bis 4 Kohlenstoffatomen sind; oder R³ und R⁴ zusammen ein zweiwertiger Alkylen-Rest der Formel -(CH₂)ₘ-X-(CH₂)ₒ- sind, wobei X = O, NR, worin R ein einwertiger Alkyl-Rest mit 1 bis 4 Kohlenstoffatomen ist, oder S und m und o unabhängig voneinander eine ganze Zahl von 2 bis 4 sind, wobei die Summe von m und o 4 bis 6 ist.

4. Zusammensetzung nach Anspruch 3, wobei die Zink(II)-Komplexverbindung die Formel Zn(L1)ₓ(Y)₂₋ₓ aufweist, wobei x bevorzugt 2 ist.

5. Zusammensetzung nach Anspruch 2, wobei der Ligand L der Formel (I) ein Ligand L2 ist, worin
n 1, 2 oder 3, insbesondere 1 oder 2, ist;
A für einen Polyoxyalkylen-Rest oder einen Rest einer polyoxyalkylierten Verbindung steht;
R¹ ein Alkyl-Rest mit 1 bis 4 Kohlenstoffatomen oder ein Aryl-Rest ist und R² ein Wasserstoff-Rest ist; oder R¹ und R² zusammen ein Alkylen-Rest mit 3 bis 4 Kohlenstoffatomen sind;
R³ ein Wasserstoff-Rest, ein einwertiger gesättigter Kohlenwasserstoff-Rest mit 1 bis 12 Kohlenstoffatomen, der gegebenenfalls ein oder mehrere Heteroatome enthält, oder ein Benzyl-Rest ist.

6. Zusammensetzung nach Anspruch 5, wobei die Zink(II)-Komplexverbindung die Formel Znₖ(L2)ₓ(Y)₂ₖ₋ₙₓ aufweist, wobei k bevorzugt eine ganze Zahl von 1 bis 5, besonders bevorzugt 1, ist, und/oder n bevorzugt 1 oder 2 ist.

7. Zusammensetzung nach irgendeinem der Ansprüche 2 bis 6, wobei das Silangruppen-haltige Polymer im Mittel 1,3 bis 4 Silangruppen pro Molekül aufweist.

8. Zusammensetzung nach irgendeinem der Ansprüche 2 bis 7, wobei das Silangruppen-haltige Polymer ein Zahlenmittel des Molekulargewichts Mn, gemessen mittels GPC gegen Polystyrol-Standard, im Bereich von 1000 bis 30'000 g/mol, bevorzugt von 2000 bis 20'000 g/mol, aufweist.

9. Zusammensetzung nach irgendeinem der Ansprüche 2 bis 8, wobei das Silangruppen-haltige Polymer erhältlich ist aus
der Copolymerisation von (Meth)acrylsilanen mit nicht silanfunktionellen (Meth)acrylaten und/oder Olefinen, oder
der Pfropfung von Polyolefinen oder Poly(meth)acrylaten mit Vinylsilanen oder (Meth)acrylsilanen, oder
der Hydrosilylierung von endständige Allylgruppen aufweisenden Polymeren mit Hydrosilanen, oder
der Michael-artigen Umsetzung von endständige (Meth)acrylgruppen aufweisenden Polymeren mit Aminosilanen oder Mercaptosilanen, oder der Umsetzung von Silangruppen aufweisenden Polymeren aus der Copolymerisation von Alkylenoxiden und Epoxysilanen mit Polyisocyanaten, oder
der Umsetzung von endständige Hydroxylgruppen aufweisenden Polymeren mit Isocyanatosilanen, oder
der Umsetzung von endständige Isocyanatgruppen aufweisenden Polymeren mit Aminosilanen, Hydroxysilanen oder Mercaptosilanen.

10. Zusammensetzung nach irgendeinem der Ansprüche 2 bis 9, wobei das Silangruppen-haltige Polymer ein Silangruppen-haltiger Polyether, bevorzugt ein Alkoxysilangruppen-haltiger Polyether, ist, der vorzugsweise erhältlich ist aus
der Hydrosilylierung von endständige Allylgruppen aufweisenden, gegebenenfalls kettenverlängerten Polyethern mit Hydrosilanen, oder der Michael-artigen Umsetzung von endständige (Meth)acrylgruppen aufweisenden, gegebenenfalls kettenverlängerten Polyethern mit Aminosilanen oder Mercaptosilanen, oder
der Umsetzung von Alkoxysilangruppen aufweisenden Polyethern aus der Copolymerisation von Alkylenoxiden und Epoxysilanen mit Polyisocyanaten, oder
der Umsetzung von endständige Hydroxylgruppen aufweisenden, gegebenenfalls kettenverlängerten Polyethern mit Isocyanatosilanen, oder
der Umsetzung von endständige Isocyanatgruppen aufweisenden, gegebenenfalls kettenverlängerten Polyethern mit Aminosilanen, Hydroxysilanen oder Mercaptosilanen.

11. Zusammensetzung nach Anspruch 10, wobei der Silangruppen-haltige Polyether, bevorzugt der Alkoxysilangruppen-haltige Polyether, in der Polymerkette neben Oxyalkylen-Einheiten mindestens eine funktionelle Gruppe ausgewählt aus Harnstoffgruppen, Urethangruppen, Thiourethangruppen, Estergruppen und/oder Amidgruppen, bevorzugt Harnstoffgruppen und/oder Urethangruppen, aufweist.

12. Zusammensetzung nach irgendeinem der Ansprüche 2 bis 11, wobei die Zusammensetzung mindestens ein Additiv ausgewählt aus einer Base als Co-Katalysator, einem Weichmacher, einem Füllstoff bzw. einen Verstärker, einem Rheologie-Additiv, einem Silan-Haftvermittler oder - Vernetzer, einem Trocknungsmittel und einem Stabilisator umfasst.

13. Zusammensetzung nach irgendeinem der Ansprüche 2 bis 12, wobei die Zusammensetzung eine einkomponentige oder eine mehrkomponentige, insbesondere eine zweikomponentige Zusammensetzung, ist, wobei die Zusammensetzung bevorzugt eine einkomponentige Zusammensetzung ist.

14. Zusammensetzung nach irgendeinem der Ansprüche 2 bis 13, wobei die Zusammensetzung eine Vergussmasse, eine Formmasse, ein Dichtstoff, ein Klebstoff, eine Beschichtungszusammensetzung, ein Primer oder eine Spachtelmasse ist.

15. Produkt, das eine ausgehärtete Zusammensetzung umfasst, wobei die Zusammensetzung eine Zusammensetzung nach irgendeinem der Ansprüche 2 bis 14 ist, wobei die ausgehärtete Zusammensetzung vorzugsweise ein elastischer Kunststoff ist.

## Claims

1. Use of a zinc(ll) complex of the formula Znₖ(L)ₓ(Y)₂ₖ₋ₙₓ where k is an integer from 1 to 10, x is 1, 2, 3 or 4, n corresponds to the value of n in the formula (I) of the ligand L below, Y is a singly negatively charged ligand and L is a ligand of the formula (I) 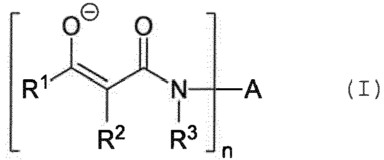 where
n is 1, 2 or 3,
A is R⁴ or a polyoxyalkylene radical or a radical of a polyoxyalkylated compound optionally having one or two terminal 1,3-ketoamide groups of the formula 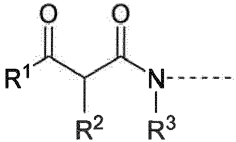 where R¹, R² and R³ are as defined below,
R¹ and R² are each independently a hydrogen radical or a monovalent saturated or unsaturated hydrocarbyl radical having 1 to 10 carbon atoms or together are a divalent alkylene radical having 3 to 6 carbon atoms, and
R³ and R⁴ are each independently a hydrogen radical or a monovalent saturated hydrocarbyl radical which has 1 to 12 carbon atoms and optionally contains one or more heteroatoms or together are a divalent alkylene radical which has 3 to 6 carbon atoms and optionally contains one or more heteroatoms,
as catalyst for the crosslinking of polymers containing silane groups by means of moisture.

2. Composition comprising
at least one polymer containing silane groups and at least one zinc(ll) complex of the formula Znₖ(L)ₓ(_{Y})₂ₖ₋ₙₓ where k is an integer from 1 to 10, x is 1, 2, 3 or 4, n corresponds to the value of n in the formula (I) of the ligand L below, Y is a singly negatively charged ligand and L is a ligand of the formula (I) 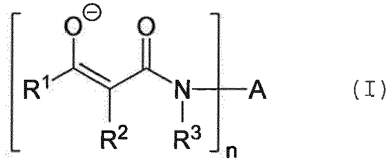 where
n is 1, 2 or 3,
A is R⁴ or a polyoxyalkylene radical or a radical of a polyoxyalkylated compound optionally having one or two terminal 1,3-ketoamide groups of the formula 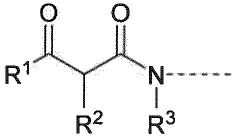 where R¹, R² and R³ are as defined below,
R¹ and R² are each independently a hydrogen radical or a monovalent saturated or unsaturated hydrocarbyl radical having 1 to 10 carbon atoms or together are a divalent alkylene radical having 3 to 6 carbon atoms, and
R³ and R⁴ are each independently a hydrogen radical or a monovalent saturated hydrocarbyl radical which has 1 to 12 carbon atoms and optionally contains one or more heteroatoms or together are a divalent alkylene radical which has 3 to 6 carbon atoms and optionally contains one or more heteroatoms.

3. Composition according to Claim 2, wherein the ligand L of the formula (I) is a ligand L1 in which
n is 1 and A is R⁴;
R¹ is an alkyl radical having 1 to 4 carbon atoms or an aryl radical and R² is a hydrogen radical; or R¹ and R² together are an alkylene radical having 3 to 4 carbon atoms;
R³ and R⁴ are each independently an alkyl radical having 1 to 8 carbon atoms or a cycloalkyl radical having 5 to 6 carbon atoms or an alkyl ether radical having 1 to 4 carbon atoms; or R³ and R⁴ together are a divalent alkylene radical of the formula -(CH₂)ₘ-X-(CH₂)ₒ- where X = O, NR in which R is a monovalent alkyl radical having 1 to 4 carbon atoms, or S and m and o are each independently an integer from 2 to 4, where the sum total of m and o is 4 to 6.

4. Composition according to Claim 3, wherein the zinc(ll) complex has the formula Zn(L1)ₓ(Y)₂₋ₓ where x is preferably 2.

5. Composition according to Claim 2, wherein the ligand L of the formula (I) is a ligand L2 in which
n is 1, 2 or 3, especially 1 or 2;
A is a polyoxyalkylene radical or a radical of a polyoxyalkylated compound;
R¹ is an alkyl radical having 1 to 4 carbon atoms or an aryl radical and R² is a hydrogen radical; or R¹ and R² together are an alkylene radical having 3 to 4 carbon atoms;
R³ is a hydrogen radical, a monovalent saturated hydrocarbyl radical which has 1 to 12 carbon atoms and optionally contains one or more heteroatoms, or a benzyl radical.

6. Composition according to Claim 5, wherein the zinc(ll) complex has the formula Znₖ(L2)ₓ(Y)₂ₖ₋ₙₓ where k is preferably an integer from 1 to 5, more preferably 1, and/or n is preferably 1 or 2.

7. Composition according to any one of Claims 2 to 6, wherein the polymer containing silane groups has an average of 1.3 to 4 silane groups per molecule.

8. Composition according to any one of Claims 2 to 7, wherein the polymer containing silane groups has a number-average molecular weight Mn, measured by means of GPC against a polystyrene standard, in the range from 1000 to 30'000 g/mol, preferably from 2000 to 20'000 g/mol.

9. Composition according to any one of Claims 2 to 8, wherein the polymer containing silane groups is obtainable from
the copolymerization of (meth)acryloylsilanes with non-silane-functional (meth)acrylates and/or olefins, or
the grafting of polyolefins or poly(meth)acrylates with vinylsilanes or (meth)acryloylsilanes, or the hydrosilylation of polymers having terminal allyl groups with hydrosilanes, or
the Michael-like reaction of polymers having terminal (meth)acryloyl groups with aminosilanes or mercaptosilanes, or
the reaction of polymers having silane groups from the copolymerization of alkylene oxides and epoxysilanes with polyisocyanates, or
the reaction of polymers having terminal hydroxyl groups with isocyanatosilanes, or
the reaction of polymers having terminal isocyanate groups with aminosilanes, hydroxysilanes or mercaptosilanes.

10. Composition according to any one of Claims 2 to 9, wherein the polymer containing silane groups is a polyether containing silane groups, preferably a polyether containing alkoxysilane groups, preferably one obtainable from
the hydrosilylation of optionally chain-extended polyethers having terminal allyl groups with hydrosilanes, or
the Michael-like reaction of optionally chain-extended polyethers having terminal (meth)acryloyl groups with aminosilanes or mercaptosilanes, or
the reaction of polyethers having alkoxysilane groups from the copolymerization of alkylene oxides and epoxysilanes with polyisocyanates, or the reaction of optionally chain-extended polyethers having terminal hydroxyl groups with isocyanatosilanes, or
the reaction of optionally chain-extended polyethers having terminal isocyanate groups with aminosilanes, hydroxysilanes or mercaptosilanes.

11. Composition according to Claim 10, wherein the polyether containing silane groups, preferably the polyether containing alkoxysilane groups, has not only oxyalkylene units in the polymer chain but also at least one functional group selected from urea groups, urethane groups, thiourethane groups, ester groups and/or amide groups, preferably urea groups and/or urethane groups.

12. Composition according to any one of Claims 2 to 11, wherein the composition comprises at least one additive selected from a base as cocatalyst, a plasticizer, a filler or reinforcer, a rheology additive, a silane adhesion promoter or crosslinker, a desiccant and a stabilizer.

13. Composition according to any one of Claims 2 to 12, wherein the composition is a one-pack or multipack, especially two-pack, composition, the composition preferably being a one-pack composition.

14. Composition according to any one of Claims 2 to 13, wherein the composition is a potting compound, a molding compound, a sealant, an adhesive, a coating composition, a primer or a spackling compound.

15. Product comprising a cured composition, wherein the composition is a composition according to any one of Claims 2 to 14, the cured composition preferably being an elastic polymer.

## Revendications

1. Utilisation d'un composé complexe de zinc (II) de formule Znₖ(L)ₓ(Y)₂ₖ₋ₙₓ, dans laquelle k représente un entier entre 1 et 10, x représente 1, 2, 3 ou 4, n correspond au n de la formule (I) suivante du ligand L, Y représente un ligand à charge négative simple et L représente un ligand de formule (I) 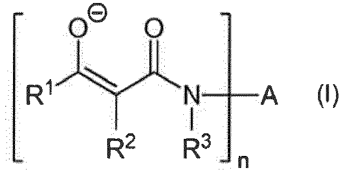 dans laquelle
n = 1, 2 ou 3,
A représente R⁴ ou un résidu polyoxyde d'alkylène ou un résidu d'un composé polyoxyalkylé, éventuellement avec un ou deux groupes 1,3-cétoamide terminaux de formule 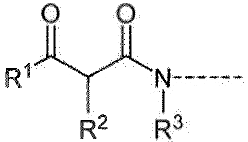 R¹, R² et R³ étant définis comme ci-après,
R¹ et R² indépendamment l'un de l'autre, sont un résidu hydrogène ou un résidu hydrocarbure monovalent saturé ou insaturé avec 1 à 10 atomes de carbone, ou sont ensemble un résidu alkylène bivalent avec 3 à 6 atomes de carbone, et
R³ et R⁴ indépendamment l'un de l'autre, sont un résidu hydrogène ou un résidu hydrocarbure monovalent saturé avec 1 à 12 atomes de carbone, contenant éventuellement un ou plusieurs hétéroatomes, ou sont ensemble un résidu alkylène bivalent avec 3 à 6 atomes de carbone, contenant éventuellement un ou plusieurs hétéroatomes, comme catalyseur de réticulation de polymères contenant des groupes silane au moyen de l'humidité.

2. Composition contenant au moins un polymère contenant des groupes silanes et au moins un composé complexe de zinc (II) de formule Znₖ(L)ₓ(Y)₂ₖ₋ₙₓ, dans laquelle k représente un entier entre 1 et 10, x représente 1, 2, 3 ou 4, n correspond au n de la formule (I) suivante du ligand L, Y représente un ligand à charge négative simple et L représente un ligand de formule (I) 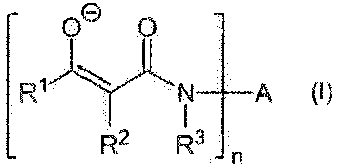 dans laquelle
n = 1, 2 ou 3,
A représente R⁴ ou un résidu polyoxyde d'alkylène ou un résidu d'un composé polyoxyalkylé, éventuellement avec un ou deux groupes 1,3-cétoamide terminaux de formule 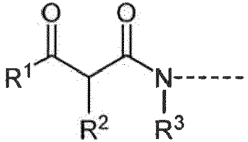 R¹, R² et R³ étant définis comme ci-après,
R¹ et R² indépendamment l'un de l'autre, sont un résidu hydrogène ou un résidu hydrocarbure monovalent saturé ou insaturé avec 1 à 10 atomes de carbone, ou sont ensemble un résidu alkylène bivalent avec 3 à 6 atomes de carbone, et
R³ et R⁴ indépendamment l'un de l'autre, sont un résidu hydrogène ou un résidu hydrocarbure monovalent saturé avec 1 à 12 atomes de carbone, contenant éventuellement un ou plusieurs hétéroatomes, ou sont ensemble un résidu alkylène bivalent avec 3 à 6 atomes de carbone, contenant éventuellement un ou plusieurs hétéroatomes.

3. Composition selon la revendication 2, le ligand L de formule (I) étant un ligand L1, dans laquelle
n = 1 et A représente R⁴ ;
R¹ est un résidu alkyle avec 1 à 4 atomes de carbone ou un résidu aryle et R² est un résidu hydrogène ; ou R¹ et R² ensemble sont un résidu alkylène avec 3 à 4 atomes de carbone ;
R³ et R⁴ sont, indépendamment l'un de l'autre, un résidu alkyle avec 1 à 8 atomes de carbone ou un résidu cycloalkyle avec 5 à 6 atomes de carbone ou un résidu alkyléther avec 1 à 4 atomes de carbone ; ou R³ et R⁴ ensemble sont un résidu alkylène bivalent de formule -(CH₂)ₘ-X-(CH₂)ₒ-, dans laquelle X = O ou NR avec R étant un résidu alkyle monovalent avec 1 à 4 atomes de carbone, ou S et m et o, indépendamment l'un de l'autre, sont un entier entre 2 et 4, la somme de m et o étant entre 4 et 6.

4. Composition selon la revendication 3, dans laquelle le composé complexe de zinc (II) comprend la formule Znₖ(L1)ₓ(Y)₂₋ₓ, dans laquelle x est préférentiellement 2.

5. Composition selon la revendication 2, dans laquelle le ligand L de formule (I) est un ligand L2, dans laquelle
n = 1, 2 ou 3, en particulier 1 ou 2 ;
A représente un résidu polyoxyde d'alkylène ou un résidu d'un composé polyoxyalkylé ;
R¹ est un résidu alkyle avec 1 à 4 atomes de carbone ou un résidu aryle et R² est un résidu hydrogène ; ou R¹ et
R² ensemble sont un résidu alkylène avec 3 à 4 atomes de carbone ;
R³ est un résidu hydrogène, un résidu hydrocarbure monovalent saturé avec 1 à 12 atomes de carbone, contenant éventuellement un ou plusieurs hétéroatomes, ou un résidu benzyle.

6. Composition selon la revendication 5, dans laquelle le composé complexe de zinc (II) comprend la formule Znₖ(L2)ₓ(Y)₂ₖ₋ₙₓ, dans laquelle k est préférentiellement un entier entre 1 et 5, particulièrement préférentiellement 1, et/ou n est préférentiellement 1 ou 2.

7. Composition selon l'une quelconque des revendications 2 à 6, dans laquelle le polymère contenant des groupes silanes présente en moyenne 1,3 à 4 groupes silanes par molécule.

8. Composition selon l'une quelconque des revendications 2 à 7, dans laquelle le polymère contenant des groupes silanes présente un poids moléculaire moyen en nombre, mesuré par CPG contre un standard polystyrène, entre 1 000 et 30 000 g/mol, préférentiellement entre 2 000 et 20 000 g/mol.

9. Composition selon l'une quelconque des revendications 2 à 8, dans laquelle le polymère contenant des groupes silanes s'obtient par copolymérisation de (méth)acrylsilanes avec des (méth)acrylates non silane-fonctionnels et/ou des oléfines, ou par greffage de polyoléfines ou de poly(méth)acrylates avec des vinylsilanes ou des (méth)acrylsilanes, ou par hydrosilylation de polymères présentant des groupes allyles terminaux avec des hydrosilanes, ou par réaction de type Michael de polymères présentant des groupes (méth)acryles terminaux avec des aminosilanes ou des mercaptosilanes, ou par réaction de polymères présentant des groupes silanes terminaux issus de la copolymérisation d'oxydes d'alkylènes et d'époxysilanes avec des polyisocyanates, ou par réaction de polymères présentant des groupes hydroxyles terminaux avec des isocyanatosilanes, ou par réaction de polymères présentant des groupes isocyanates terminaux avec des aminosilanes, des hydroxysilanes ou des mercaptosilanes.

10. Composition selon l'une quelconque des revendications 2 à 9, dans laquelle le polymère contenant des groupes silanes est un polyéther contenant des groupes silanes, préférentiellement un polyéther contenant des groupes alcoxysilanes, qui s'obtient préférentiellement par hydrosilylation de polymères présentant des groupes allyles terminaux, éventuellement des polyéthers à longue chaîne, avec des hydrosilanes, ou par réaction de type Michael de polymères présentant des groupes (méth)acryles terminaux, éventuellement des polyéthers à longue chaîne, avec des aminosilanes ou des mercaptosilanes, ou par réaction de polyéthers présentant des groupes alcoxysilanes terminaux issus de la copolymérisation d'oxydes d'alkylène et d'époxysilanes avec des polyisocyanates, ou par réaction de polymères présentant des groupes hydroxyles terminaux, éventuellement des polyéthers à longue chaîne, avec des isocyanatosilanes, ou par réaction de polyéthers, éventuellement à longue chaîne, présentant des groupes isocyanates terminaux, avec des aminosilanes, des hydroxysilanes ou des mercaptosilanes.

11. Composition selon la revendication 10, dans laquelle le polyéther contenant des groupes silane, préférentiellement le polyéther contenant des groupes alcoxysilane, présente dans sa chaîne polymère, outre des unités oxydes d'alkylène, au moins un groupe fonctionnel choisi parmi des groupes urée, uréthane, thiouréthane, ester et/ou amide, préférentiellement urée et/ou uréthane.

12. Composition selon l'une quelconque des revendications 2 à 11, la composition contenant au moins un additif choisi parmi une base co-catalyseur, un plastifiant, une charge ou respectivement un durcisseur, un additif rhéologique, un liant ou agent de réticulation pour silanes, un agent de séchage et un stabilisateur.

13. Composition selon l'une quelconque des revendications 2 à 12, la composition étant une composition à un ou plusieurs composants, en particulier une composition à deux composants, dans laquelle la composition est préférentiellement une composition à un composant.

14. Composition selon l'une quelconque des revendications 2 à 13, la composition étant une masse de scellement, une masse à mouler, un mastic, une colle, une composition de revêtement, un apprêt ou un mastic.

15. Produit contenant une composition durcissable, la composition étant une composition selon l'une quelconque des revendications 2 à 14, la composition durcissable étant préférentiellement un plastique élastique.
